# EUROPEAN PATENT APPLICATION

(11) **EP 4 665 061 A1**
(43) Date of publication of application: **17.12.2025**
(21) Application number: 24769805.3
(22) Date of filing: 05.03.2024
(51) Int. Cl.: H04W 72/512, H04W 74/00

(54) **COMMUNICATION METHOD AND COMMUNICATION APPARATUS**

(30) Priority: 10.03.2023 CN 202310261115
(71) Applicant: Huawei Technologies Co., Ltd., Shenzhen, Guangdong 518129 (CN)
(72) Inventor: YANG, Mao, Xi'an, Shaanxi 710072 (CN); YAN, Zhongjiang, Xi'an, Shaanxi 710072 (CN); LI, Yunbo, Shenzhen, Guangdong 518129 (CN); YU, Jian, Shenzhen, Guangdong 518129 (CN)
(74) Representative: MERH-IP Matias Erny Reichl Hoffmann Patentanwälte PartG mbB
(86) International application number: PCT/CN2024/080143
(87) International publication number: WO 2024/188111

(57) **Abstract**

This application provides a communication method and a communication apparatus. This application may be applied to a wireless local area network system that supports 802.11 series protocols, for example, a next-generation Wi-Fi protocol of IEEE 802.11ax such as 802.11be, Wi-Fi 7, or EHT, and a next generation of 802.11be such as Wi-Fi 8, UHR, or Wi-Fi AI. The method may be applied to a TXOP of a first access point. The first access point notifies a first station by sending first indication information that the first station can perform reporting if there is currently to-be-transmitted low-latency data. In this way, when the first station has an urgent low-latency data, the first station may have an opportunity to feed back this case to the first access point. Then, the first access point may determine, based on feedback of the first station, whether to enable the first station to perform preemption transmission in a subsequent procedure. The method can improve performance of a low-latency data and avoid a waste of channel resources.

## Description

This application claims priority to Chinese Patent Application No. 202310261115.5, filed with the China National Intellectual Property Administration on March 10, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, an access point (access point, AP) may send a trigger frame for random contention at a transmission opportunity (transmission opportunity, TXOP) of the access point or another station (station, STA), to trigger a STA having an uplink low-latency data to perform preemption transmission. However, only a STA knows whether the STA has an urgent uplink low-latency data, while the AP does not know. Therefore, the AP does not know when to send the trigger frame for random contention, and can only blindly send the trigger frame for random contention. For example, the AP sends the trigger frame for random contention at the TXOP of the AP. In a possible scenario, if no STA has a to-be-transmitted uplink low-latency data after the AP sends the trigger frame for random contention, no STA performs preemption transmission after the AP sends the trigger frame for random contention. Consequently, overheads of the AP are increased, and channel resources are wasted. In another possible scenario, when an uplink low-latency data arrives at a STA, but the AP does not send the trigger frame for random contention within a long time after the uplink low-latency data arrives, quality of service of the low-latency data is significantly affected.

### SUMMARY

Embodiments of this application provide a communication method and a communication apparatus, to ensure performance of a low-latency data and avoid a waste of channel resources.

According to a first aspect, a communication method is provided, and is applied to a TXOP of a first AP. The method may be performed by the first AP, or may be performed by a chip or a circuit configured in the first AP. This is not limited in this application.

The method may include: The first AP determines a first physical layer protocol data unit PPDU. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU. The first AP sends the first PPDU.

In the foregoing technical solution, the first AP notifies a first STA by sending the first indication information that the first STA can perform reporting if there is currently to-be-transmitted low-latency data. In this way, when the first STA has an urgent low-latency data, the first STA may have an opportunity to feed back this case to the first AP. Then, the first AP may determine, based on feedback of the first STA, whether to enable the first STA to perform preemption transmission at a TXOP of the first AP in a subsequent procedure. Compared with the conventional technologies, this method ensures performance of a low-latency data. This does not cause a waste of channel resources. In addition, overheads are low.

It should be understood that preemption means that transmission of a low-latency data is preferentially performed and transmission of a non-low-latency data is resumed after transmission of the low-latency data is completed.

With reference to the first aspect, in some implementations of the first aspect, the method further includes: The first AP starts, in a first time period, to receive a third PPDU from the first STA. The third PPDU includes second indication information. The second indication information indicates that the first STA has to-be-transmitted low-latency data. The first time period is a time period corresponding to a first duration after the second PPDU. The first AP triggers, based on the second indication information, a STA having to-be-transmitted low-latency data to transmit the low-latency data.

It should be noted that the first duration is greater than a short interframe space SIFS, and the SIFS is a time interval between frames in a TXOP.

For example, in this application, the third PPDU includes a preemption control frame, and the preemption control frame carries the second indication information. Optionally, the preemption control frame may use an existing frame structure, or may also use a newly-defined frame structure.

It should be noted that, if a plurality of STAs feed back preemption control frames, all bits included in the preemption control frames sent by the plurality of STAs need to be the same, and receiving addresses of the preemption control frames need to be an address of the first AP. For example, a STA 1 and a STA 2 feed back respective preemption control frames. If bits corresponding to the preemption control frame sent by the STA 1 are 010100, bits corresponding to the preemption control frame sent by the STA 2 are also 010100.

It should be further noted that the plurality of STAs need to start to send the preemption control frames to the first AP at a same moment. For example, after the second PPDU, the plurality of STAs may wait for a SIFS space and then simultaneously feed back the preemption control frames to the first AP.

Optionally, if a STA (for example, a STA 3) that receives the first PPDU is just a destination receiver of a MAC frame of the first PPDU, when the first indication information indicates that existence of to-be-transmitted low-latency data is allowed to be reported after the first PPDU, the STA 3 is not allowed to immediately transmit an acknowledgment frame for the first PPDU to the first AP after a SIFS after the first PPDU is received. A specific reason is as follows: The first STA may transmit the preemption control frame in the first time period. If the acknowledgment frame is transmitted after the SIFS after the first PPDU, interference is generated because bits included in the preemption control frame are different from those included in the acknowledgment frame of the first PPDU. As a result, the first AP cannot correctly receive the preemption control frame. This is also a reason why all the bits included in the preemption control frames sent by the plurality of STAs associated with the first AP need to be the same and reported to the first AP at the same moment.

Optionally, before the first AP triggers a STA having to-be-transmitted low-latency data to transmit the low-latency data, the first AP has to-be-transmitted low-latency data. In this case, the first AP may determine by itself whether to first transmit the low-latency data of the first AP or first trigger the STA having the to-be-transmitted low-latency data to transmit the low-latency data. For example, if the first AP considers that a downlink service is more urgent, the first AP may first send the low-latency data of the first AP, and after completing sending the low-latency data of the first AP, trigger the STA having the to-be-transmitted low-latency data to transmit the low-latency data. With reference to the first aspect, in some implementations of the first aspect, that the first AP triggers, based on the second indication information, the STA having the to-be-transmitted low-latency data to transmit the data includes: The first AP sends a fourth PPDU. The fourth PPDU includes third indication information. The third indication information includes a first identifier and information about at least one resource unit RU corresponding to the first identifier. The first identifier indicates that the at least one RU is used only for random contention transmission performed on the low-latency data by the STA having the to-be-transmitted low-latency data.

It may be understood that the fourth PPDU is a trigger frame for random contention, and the third indication information is a user information field #1 in the trigger frame. In this case, the first identifier is information included in an AID12 field in the user information field #1, and the information about the at least one RU corresponding to the first identifier is information included in a resource unit allocation resource in the user information field #1.

With reference to the first aspect, in some implementations of the first aspect, the STA having the to-be-transmitted low-latency data is the STA that sends the second indication information.

According to a second aspect, a communication method is provided. The communication method is applied to a TXOP of a first AP. The method may be performed by a first STA, or may be performed by a chip or a circuit configured in a first STA. This is not limited in this application.

The method may include: The first STA receives a first physical layer protocol data unit PPDU from a first AP. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU. The first STA parses the first PPDU.

For beneficial effects of the second aspect, refer to the descriptions in the first aspect. Details are not described herein again.

With reference to the second aspect, in some implementations of the second aspect, the method further includes: The first STA starts, in a first time period, to send a third PPDU to the first AP. The third PPDU includes second indication information. The second indication information indicates that the first STA has to-be-transmitted low-latency data. The first time period is a time period corresponding to a first duration after the second PPDU.

With reference to the second aspect, in some implementations of the second aspect, the method further includes: The first STA receives a fourth PPDU from the first AP. The fourth PPDU includes third indication information. The third indication information includes a first identifier and information about at least one resource unit RU corresponding to the first identifier. The first identifier indicates that the at least one RU is used only for random contention transmission performed on the low-latency data by the STA having the to-be-transmitted low-latency data.

According to a third aspect, a communication method is provided. The communication method is applied to a TXOP of a first STA. The method may be performed by a first AP, or may be performed by a chip or a circuit configured in the first AP. This is not limited in this application.

The method may include: The first AP receives a first physical layer protocol data unit PPDU from a first STA. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU. The first AP parses the first PPDU.

In the foregoing technical solution, the first STA notifies a second STA and the first AP by sending the first indication information that the second STA and the first AP can perform reporting if there is currently to-be-transmitted low-latency data. In this way, when the second STA and the first AP have an urgent low-latency data, there may be an opportunity for feeding back this case, and the first STA may determine, based on feedback, whether to enable the second STA and the first AP to perform preemption transmission at a TXOP of the first STA in a subsequent procedure. Compared with the conventional technologies, this method ensures performance of a low-latency data. This does not cause a waste of channel resources.

In an implementation of the third aspect, a procedure when the first AP has to-be-transmitted low-latency data is different from a procedure when the first AP has no to-be-transmitted low-latency data. Therefore, the procedure when the first AP has no to-be-transmitted low-latency data is first described herein.

With reference to the third aspect, in some implementations of the third aspect, the method further includes: The first AP starts, in a first time period, to receive a third PPDU sent by the second STA. The third PPDU includes second indication information. The second indication information indicates that the STA that sends the second indication information has to-be-transmitted low-latency data. The first time period is a time period corresponding to a first duration after the second PPDU. The first AP triggers, based on the second indication information, the STA having the to-be-transmitted low-latency data to perform random contention transmission on the low-latency data. Alternatively, the first AP receives a fifth PPDU. The fifth PPDU includes fourth indication information. The fourth indication information indicates the first AP to trigger a STA having to-be-transmitted low-latency data to perform random contention transmission on the low-latency data. The first AP triggers, based on the fourth indication information, the STA having the to-be-transmitted low-latency data to perform random contention transmission on the low-latency data.

For example, in this application, the third PPDU includes a preemption control frame, and the preemption control frame carries the second indication information. In this application, the fifth PPDU includes a preemption notification frame, and the preemption notification frame carries the fourth indication information. Optionally, the preemption control frame and the preemption notification frame may reuse an existing frame structure, or may also use a newly-defined frame structure. It should be noted that, regardless of whether address information included in the second indication information is address information of the first STA or address information of the first AP, both the first AP and the first STA can receive the third PPDU.

It should be understood that the first duration is greater than a short interframe space SIFS, and the SIFS is a time interval between frames in a TXOP.

Optionally, the STA having the to-be-transmitted low-latency data is the STA that sends the second indication information.

It may be understood that, in a subsequent procedure, the first AP needs to determine, based on the second indication information, whether the first AP triggers the STA having the to-be-transmitted low-latency data to perform random contention transmission on the low-latency data. In this case, because both the first AP and the first STA can receive the third PPDU, the foregoing technical solution includes two implementations. In a first implementation, the first STA may listen to a channel in the first time period, and after receiving the second indication information in the third PPDU, notify the first AP that the STA having the to-be-transmitted low-latency data is triggered to perform random contention transmission on the low-latency data. In the econd implementation, the first AP listens to the third PPDU on a channel in the first time period, and if the third PPDU is detected, determines that the STA having the to-be-transmitted low-latency data is triggered to perform random contention transmission on the low-latency data.

The following describes the procedure when the first AP has the to-be-transmitted low-latency data.

With reference to the third aspect, in some implementations of the third aspect, the method further includes: The first AP sends, in a first time period, a third PPDU to the first STA. The third PPDU includes second indication information. The second indication information indicates that the first AP has to-be-transmitted low-latency data. The first time period is a time period corresponding to a first duration after the second PPDU. The first AP sends the low-latency data of the first AP after sending the third PPDU.

With reference to the third aspect, in some implementations of the third aspect, before the first AP sends the low-latency data of the first AP, the method further includes: The first AP receives a fifth PPDU from the first STA. The fifth PPDU includes fourth indication information. The fourth indication information indicates the first AP to send the low-latency data. As described in the first aspect for the preemption control frame, if a STA sends a preemption control frame (that is, the third PPDU), the preemption control frame sent by the STA and that sent by an AP are the same and sent at a same moment. In this case, the first AP cannot determine whether another STA also sends a preemption control frame. Therefore, in an implementation 1, after receiving a preemption notification frame (that is, the fifth PPDU), the first AP considers that the preemption notification frame is used to notify the first AP that the first AP can send the low-latency data. In this case, the first AP sends only the low-latency data of the first AP, and does not further send a trigger frame. In an implementation 2, after sending a preemption control frame, the first AP directly sends the low-latency data of the first AP, and also does not further send a trigger frame.

It should be understood that, in the procedure when the first AP has the to-be-transmitted low-latency data and the procedure when the first AP has no to-be-transmitted low-latency data, the preemption notification frames (that is, the fifth PPDUs) sent by the first STA are the same. A difference is that the first AP generates different interpretations based on whether the first AP sends the preemption frame.

With reference to the third aspect, in some implementations of the third aspect, the second indication information includes the address information of the first AP and the address information of the first STA.

According to a fourth aspect, a communication method is provided, and is applied to a TXOP of a first STA. The method may be performed by the first STA, or may be performed by a chip or a circuit configured in the first STA. This is not limited in this application.

The method may include: The first STA determines a first physical layer protocol data unit PPDU. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU. The first STA sends the first PPDU.

For beneficial effects of the fourth aspect, refer to the descriptions in the third aspect. Details are not described herein again.

With reference to the fourth aspect, in some implementations of the fourth aspect, the method further includes: The first STA starts, in a first time period, to receive a third PPDU sent by a second STA. The third PPDU includes second indication information. The second indication information indicates that the device that sends the second indication information has to-be-transmitted low-latency data. The first STA stops sending data of the first STA after receiving the second indication information. The first time period is a time period corresponding to a first duration after the second PPDU. Alternatively, the first STA sends a fifth PPDU to a first AP after receiving the second indication information. The fifth PPDU includes fourth indication information. The fourth indication information indicates the first AP to trigger a STA having to-be-transmitted low-latency data to perform random contention transmission on the low-latency data.

It should be understood that the first duration is greater than a short interframe space SIFS, and the SIFS is a time interval between frames in a TXOP.

Optionally, the STA having the to-be-transmitted low-latency data is a STA that sends the second indication information.

With reference to the fourth aspect, in some implementations of the fourth aspect, the second indication information includes address information of the first STA and address information of the first AP.

According to a fifth aspect, a communication method is provided. The communication method is applied to a TXOP of a first STA. The method may be performed by a second STA, or may be performed by a chip or a circuit configured in a second STA. This is not limited in this application.

The method may include: The second STA receives a first physical layer protocol data unit PPDU from a first STA. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU. The second STA parses the first PPDU.

For beneficial effects of the fifth aspect, refer to the descriptions in the third aspect. Details are not described herein again.

With reference to the fifth aspect, in some implementations of the fifth aspect, the method further includes: The second STA sends a third PPDU to a first AP or the first STA in a first time period. The third PPDU includes second indication information. The second indication information indicates that the second STA has to-be-transmitted low-latency data. The first time period is a time period corresponding to a first duration after the second PPDU.

With reference to the fifth aspect, in some implementations of the fifth aspect, the method further includes: The second STA receives a fourth PPDU from the first AP. The fourth PPDU includes third indication information. The third indication information includes a first identifier and information about at least one resource unit RU corresponding to the first identifier. The first identifier indicates that the at least one RU is used only for random contention transmission performed on the low-latency data by the STA having the to-be-transmitted low-latency data. The second STA performs random contention transmission on the low-latency data of the second STA on the at least one RU.

With reference to the fifth aspect, in some implementations of the fifth aspect, the first duration is greater than a short interframe space SIFS, and the SIFS is a time interval between frames in a TXOP.

According to a sixth aspect, a communication method is provided, and is applied to a TXOP of a first AP. The method may be performed by the first AP, or may be performed by a chip or a circuit configured in the first AP. This is not limited in this application.

The method may include: The first AP sends a first physical layer protocol data unit PPDU. The first PPDU includes first indication information. The first indication information includes a first identifier and information about at least one resource unit RU corresponding to the first identifier. The first identifier indicates that the at least one RU is used only for random contention transmission performed on low-latency data by a station having the to-be-transmitted low-latency data. The first AP starts, in a first time period, to receive low-latency data from at least one STA in a STA associated with the first AP, and the first AP stops sending data of the first AP. The first time period is a time period corresponding to a first duration after the first PPDU. Alternatively, if the first AP has not received, in the first time period, low-latency data from at least one STA in a STA associated with the first AP, the first AP continues sending data of the first AP.

It should be noted that the first duration is greater than a short interframe space SIFS, and the SIFS is a time interval between frames in a TXOP.

The foregoing technical solution does not require interaction between an AP and a STA, and is all controlled by the AP, thereby reducing implementation complexity.

According to a seventh aspect, a communication method is provided. The communication method is applied to a TXOP of a first AP. The method may be performed by a first STA, or may be performed by a chip or a circuit configured in a first STA. This is not limited in this application.

The method may include: The first STA receives a first physical layer protocol data unit PPDU. The first PPDU includes first indication information. The first indication information includes a first identifier and information about at least one resource unit RU corresponding to the first identifier. The first identifier indicates that the at least one RU is used only for random contention transmission performed on low-latency data by a station having the to-be-transmitted low-latency data. The first STA starts, in a first time period, to send low-latency data to the first AP. The first time period is a time period corresponding to a first duration after the first PPDU.

It should be noted that the first duration is greater than a short interframe space SIFS, and the SIFS is a time interval between frames in a TXOP.

For beneficial effects of the seventh aspect, refer to the descriptions in the sixth aspect. Details are not described herein again.

According to an eighth aspect, a communication method is provided, and is applied to a TXOP of a first AP. The method may be performed by the first AP, or may be performed by a chip or a circuit configured in the first AP. This is not limited in this application.

The method may include: The first AP determines a first physical layer protocol data unit PPDU. The first PPDU includes first indication information. The first indication information includes a second identifier and information about at least one RU corresponding to the second identifier. The second identifier indicates that existence of to-be-transmitted low-latency data is allowed to be fed back on the at least one RU. The first AP sends the first PPDU.

In the foregoing technical solution, the first AP reserves at least one RU for feeding back a low-latency requirement by a STA. By sending the first indication information, the first AP indicates a first STA that reporting can be performed on the reserved RU if to-be-transmitted low-latency data currently exists. In this way, when the first STA has an urgent low-latency data, the first STA may have an opportunity to feed back this case to the first AP. Then, the first AP may determine, based on feedback of the first STA, whether to enable the first STA to perform preemption transmission at a TXOP of the first AP in a subsequent procedure. Compared with the conventional technologies, this method ensures performance of a low-latency data. This does not cause a waste of channel resources. In addition, overheads are low.

With reference to the eighth aspect, in some implementations of the eighth aspect, the method further includes: The first AP receives, on a first RU, a second PPDU from at least one device in a plurality of STAs associated with the first AP. The second PPDU includes second indication information. The second indication information indicates that the STA that sends the second indication information has to-be-transmitted low-latency data. The first RU is any RU in the at least one RU. The first AP triggers, based on the second indication information, the STA having the to-be-transmitted low-latency data to perform random contention transmission on the low-latency data.

In the foregoing technical solution, when receiving second indication information sent by any STA, the first AP triggers the STA having the to-be-transmitted low-latency data to transmit the low-latency data.

With reference to the eighth aspect, in some implementations of the eighth aspect, that the first AP triggers, based on the second indication information, the STA having the to-be-transmitted low-latency data to transmit the low-latency data includes: The first AP sends a third PPDU. The third PPDU includes third indication information. The third indication information includes a first identifier and information about at least one RU corresponding to the first identifier. The first identifier indicates that the at least one RU is used only for random contention transmission performed on the low-latency data by the STA having the to-be-transmitted low-latency data.

It may be understood that the third PPDU is a trigger frame for random contention, and the third indication information is a user information field #1 in the trigger frame. In this case, the first identifier is information included in an AID12 field in the user information field #1, and the information about the at least one RU corresponding to the first identifier is information included in a resource unit allocation resource in the user information field #1.

According to a ninth aspect, a communication method is provided. The communication method is applied to a TXOP of a first AP. The method may be performed by a first STA, or may be performed by a chip or a circuit configured in a first STA. This is not limited in this application.

The method may include: The first STA receives a first physical layer protocol data unit PPDU. The first PPDU includes first indication information. The first indication information includes a second identifier and information about at least one RU corresponding to the second identifier. The second identifier indicates that existence of to-be-transmitted low-latency data is allowed to be fed back on the at least one RU. The first STA parses the first PPDU.

For beneficial effects of the ninth aspect, refer to the descriptions in the eighth aspect. Details are not described herein again.

With reference to the ninth aspect, in some implementations of the ninth aspect, the method further includes: The first STA sends a second PPDU to the first AP on a first RU. The second PPDU includes second indication information. The second indication information indicates that the first STA has to-be-transmitted low-latency data. The first RU is any RU in the at least one RU.

With reference to the ninth aspect, in some implementations of the ninth aspect, the method further includes: The first STA receives a third PPDU from the first AP. The third PPDU includes third indication information. The third indication information includes a first identifier and information about at least one resource unit RU corresponding to the first identifier. The first identifier indicates that the at least one RU is used only for random contention transmission performed on low-latency data by a STA having the to-be-transmitted low-latency data.

According to a tenth aspect, a communication apparatus is provided. The apparatus is configured to perform the method provided in the first aspect, the third aspect, the sixth aspect, or the eighth aspect. Specifically, the apparatus may include a module configured to perform the first aspect, the third aspect, the sixth aspect, the eighth aspect, or any possible implementation of the first aspect, the third aspect, the sixth aspect, or the eighth aspect.

According to an eleventh aspect, a communication apparatus is provided. The apparatus is configured to perform the method provided in the second aspect, the fourth aspect, the seventh aspect, or the ninth aspect. Specifically, the apparatus may include a module configured to perform the second aspect, the fourth aspect, the seventh aspect, the ninth aspect, or any possible implementation of the second aspect, the fourth aspect, the seventh aspect, or the ninth aspect.

According to a twelfth aspect, a communication apparatus is provided. The apparatus is configured to perform the method provided in the fifth aspect. Specifically, the apparatus may include a module configured to perform the fifth aspect or any possible implementation of the fifth aspect.

According to a thirteenth aspect, a communication apparatus is provided, and includes a processor. The processor is coupled to a memory, and may be configured to execute instructions in the memory, to implement the method in the first aspect, the third aspect, the sixth aspect, the eighth aspect, or any possible implementation of the first aspect, the third aspect, the sixth aspect, or the eighth aspect. Optionally, the apparatus further includes the memory. Optionally, the apparatus further includes a communication interface, and the processor is coupled to the communication interface.

In an implementation, the apparatus is a first AP. When the apparatus is the first AP, the communication interface may be a transceiver or an input/output interface.

In another implementation, the apparatus is a chip configured in a first AP. When the apparatus is the chip configured in the first AP, the communication interface may be an input/output interface.

According to a fourteenth aspect, a communication apparatus is provided, and includes a processor. The processor is coupled to a memory, and may be configured to execute instructions in the memory, to implement the method in the second aspect, the fourth aspect, the seventh aspect, the ninth aspect, or any possible implementation of the second aspect, the fourth aspect, the seventh aspect, or the ninth aspect. Optionally, the apparatus further includes the memory. Optionally, the apparatus further includes a communication interface, and the processor is coupled to the communication interface.

In an implementation, the apparatus is a first STA. When the apparatus is the first STA, the communication interface may be a transceiver or an input/output interface.

In another implementation, the apparatus is a chip configured in a first STA. When the apparatus is the chip configured in the first STA, the communication interface may be an input/output interface.

According to a fifteenth aspect, a communication apparatus is provided, and includes a processor. The processor is coupled to a memory, and may be configured to execute instructions in the memory, to implement the method in the fifth aspect or any possible implementation of the fifth aspect. Optionally, the apparatus further includes the memory. Optionally, the apparatus further includes a communication interface, and the processor is coupled to the communication interface.

In an implementation, the apparatus is a second STA. When the apparatus is the second STA, the communication interface may be a transceiver or an input/output interface.

In another implementation, the apparatus is a chip configured in a second STA. When the apparatus is the chip configured in the second STA, the communication interface may be an input/output interface.

According to a sixteenth aspect, a computer-readable storage medium is provided. The computer-readable storage medium stores computer instructions. When the computer instructions are executed by an apparatus, the apparatus is enabled to implement the method in any one of the first aspect to the ninth aspect or any possible implementation of the first aspect to the ninth aspect.

According to a seventeenth aspect, a computer program product including instructions is provided. The computer program product includes a computer program. When the computer program is executed by an apparatus, the apparatus is enabled to implement the method provided in any one of the first aspect to the ninth aspect or any possible implementation of the first aspect to the ninth aspect.

According to an eighteenth aspect, a communication system is provided. The communication system includes the first access point, the first station, and/or the second station. The first access point is configured to perform the method in the first aspect, the third aspect, the sixth aspect, the eighth aspect, or any possible implementation of the first aspect, the third aspect, the sixth aspect, or the eighth aspect. The first station is configured to perform the method in the second aspect, the fourth aspect, the seventh aspect, the ninth aspect, or any possible implementation of the second aspect, the fourth aspect, the seventh aspect, or the ninth aspect. The second station is configured to perform the method in the fifth aspect or any possible implementation of the fifth aspect.

### BRIEF DESCRIPTION OF DRAWINGS

FIG. 1 is a diagram of a network architecture of a wireless local area network to which an embodiment of this application is applicable;
FIG. 2 is a diagram of a communication apparatus according to an embodiment of this application;
FIG. 3 is a diagram of a frame structure of an 802.11ax trigger frame;
FIG. 4 is a diagram of OFDMA uplink transmission based on a trigger frame;
FIG. 5 is a diagram of OFDMA uplink random contention transmission based on a trigger frame;
FIG. 6 is a diagram in which an AP sends a TF-R at a TXOP of the AP to trigger a STA having a low-latency data to perform uplink transmission in an uplink OFDMA random contention manner;
FIG. 7 is a diagram in which an AP sends a TF-R at a TXOP of a STA 1 to trigger another STA having a low-latency data to perform uplink transmission in an uplink OFDMA random contention manner;
FIG. 8 is a schematic flowchart of a communication method according to an embodiment of this application;
FIG. 9 is a schematic flowchart of a specific implementation of the method shown in FIG. 8;
FIG. 10 is a schematic flowchart of another communication method according to an embodiment of this application;
FIG. 11 shows a frame structure of a preemption resumption frame based on an enhanced CAS control field;
FIG. 12(a), FIG. 12(b), FIG. 12(c), and FIG. 12(d) are a schematic flowchart of a specific implementation of the method shown in FIG. 10;
FIG. 13 is a schematic flowchart of still another communication method according to an embodiment of this application;
FIG. 14 is a schematic flowchart of a specific implementation of the method shown in FIG. 13;
FIG. 15 is a schematic flowchart of still another communication method according to an embodiment of this application;
FIG. 16 is a schematic flowchart of a specific implementation of the method shown in FIG. 15;
FIG. 17 is a block diagram of a communication apparatus 200 according to an embodiment of this application; and
FIG. 18 is a block diagram of a communication apparatus 300 according to an embodiment of this application.

### DESCRIPTION OF EMBODIMENTS

The following describes technical solutions of embodiments in this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

It should be noted that the "field" in this application may be a part of information in general. In addition, a name of the field in this application is merely an example, and may be another name in specific implementation. This is not specifically limited in this application.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, extremely high throughput (extremely high throughput, EHT), 802.11ad, 802.11ay, or 802.11bf, are supported. For another example, a next generation protocol of 802.11be or Wi-Fi 8 is supported. The technical solutions provided in embodiments of this application may be applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as high throughput (high throughput, HT), the 802.11ac standard is referred to as very high throughput (very high throughput, VHT), the 802.11ax standard is referred to as high efficiency (high efficiency, HE), and the 802.11be standard is referred to as extremely high throughput (extremely high throughput, EHT). Standards before HT, such as 802.11a/b/g, are collectively referred to as non-HT (non-high throughput). At present, next-generation standards after IEEE 802.11be have also been researched, and are called ultra-high reliability (ultra-high reliability, UHR).

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network. For example, embodiments of this application are further applicable to a wireless local area network system, such as an Internet of things (internet of things, IoT) network or a vehicle-to-everything (vehicle to X, V2X) network. Certainly, embodiments of this application are applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems applicable to this application are merely examples for description, and the communication systems applicable to this application are not limited thereto. This is described herein once for all, and details are not described below again.

The WLAN may include a plurality of basic service sets (basic service sets, BSSs). Network nodes in the BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a device that supports the 802.11ax standard. Further, optionally, the AP may be a device that supports one or more WLAN standards such as 802.11ac, 802.11n, 802.11g, 802.11b, 802.11a, or a later version.

The STA in embodiments of this application may be a wireless communication chip, a wireless sensor, or a wireless communication terminal, for example, may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11ax standard. Further, optionally, the STA may support one or more WLAN standards such as 802.11ac, 802.11n, 802.11g, 802.11b, 802.11a, or a later version.

In embodiments of this application, in an example structure, the STA or the AP includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. A specific structure of an execution entity of the method provided in embodiments of this application is not uniquely limited in the foregoing examples, provided that a program that records code of the method provided in embodiments of this application can be run to perform communication according to the method provided in embodiments of this application. For example, the method provided in embodiments of this application may be performed by a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

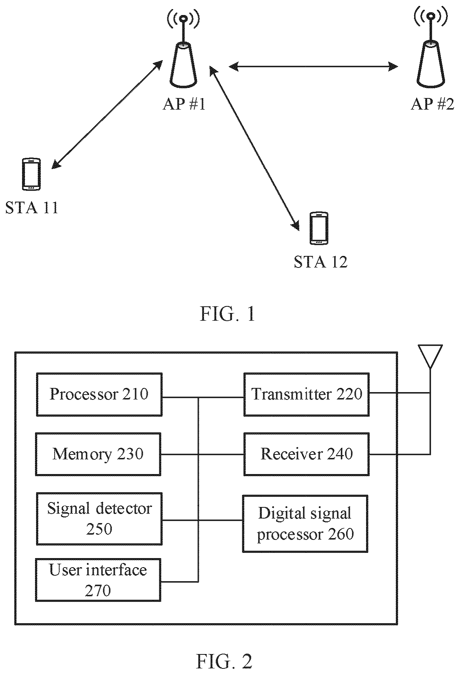

FIG. 1 is a diagram of a network architecture of a wireless local area network to which an embodiment of this application is applicable. As shown in FIG. 1, one AP may be associated with one or more STAs, that is, one AP may communicate with one or more STAs. As shown in FIG. 1, the network architecture of the wireless local area network may further include a plurality of APs, and different APs may also communicate with each other. For example, as shown in FIG. 1, the figure shows an AP #1, an AP #2, and a STA 11 and a STA 12 associated with the AP #1. Data transmission may be performed between the AP #1 and the STA 11 or the STA 12, data transmission may be performed between the STA 11 and the STA 12, and the AP #1 and the AP #2 may also communicate with each other.

It should be understood that FIG. 1 is merely an example, and the network architecture of the wireless local area network to which this application is applicable should not be limited. For example, the network architecture may further include more APs, and each AP may be associated with more STAs. This is not limited in embodiments of this application.

FIG. 2 is a diagram of a communication apparatus according to an embodiment of this application. The communication apparatus may include one or more of the following components: a processor 210, a transmitter 220, a memory 230, a receiver 240, a signal detector 250, a digital signal processor 260, and a user interface 270. It should be understood that the communication apparatus may include only some modules in the figure. For example, the communication apparatus includes the processor 210 and the memory 230. In some possible implementations, the communication apparatus may be an AP or a STA.

For ease of understanding of the technical solutions of this application, the following briefly describes related concepts or related technologies in this application.
1. Enhanced distributed channel access (enhanced distributed channel access, EDCA): An IEEE 802.11 system is deployed on an unlicensed spectrum, and a plurality of Wi-Fi devices (for example, APs and/or STAs) use Wi-Fi channel resources through contention. In a common enhanced distributed channel access (enhanced distributed channel access, EDCA) mechanism, different Wi-Fi devices each use one set of EDCA parameters to contend for a Wi-Fi channel.
2. Transmission opportunity (transmission opportunity, TXOP): After succeeding in the Wi-Fi channel contention, the Wi-Fi device may reserve a period of time for data transmission, and the period of time is referred to as a transmission opportunity (transmission opportunity, TXOP). A Wi-Fi device that successfully reserves a TXOP is referred to as a TXOP holder (holder). It should be noted that, in the TXOP, only the TXOP holder can actively send data, and other Wi-Fi devices can only receive data or send a corresponding response frame.
3. Short interframe space (short interframe space, SIFS): The SIFS is a time interval required by a wireless device between a received frame and a response frame. In an IEEE 802.11 network, the SIFS is an interframe space maintained before and after transmission of an acknowledgment frame and a clear-to-send frame. A duration of the SIFS is usually 16 microseconds (µs).
4. Preemption (preemption) transmission: A principle of preemption transmission is that transmission of a currently transmitted non-low-latency data is interrupted, and transmission of a low-latency data is preferentially performed. Transmission of the non-low-latency data is resumed after transmission of the low-latency data is completed. It should be understood that the low-latency data and the non-low-latency data are relative. The non-low-latency data may also have a latency requirement. However, the latency requirement of the non-low-latency data is longer than that of the low-latency data. In the conventional technologies, in a process of transmitting a long packet of the non-low-latency data, if there is a data packet of the low-latency data in a newly arrived buffered data packet on a sending station side, a sending station interrupts transmission of the long packet of the non-low-latency data and transmits a data packet of the low-latency data. After transmission of the data packet of the low-latency data is completed, transmission of a remaining part of the long packet that is of the non-low-latency data and that is not completely transmitted continues.

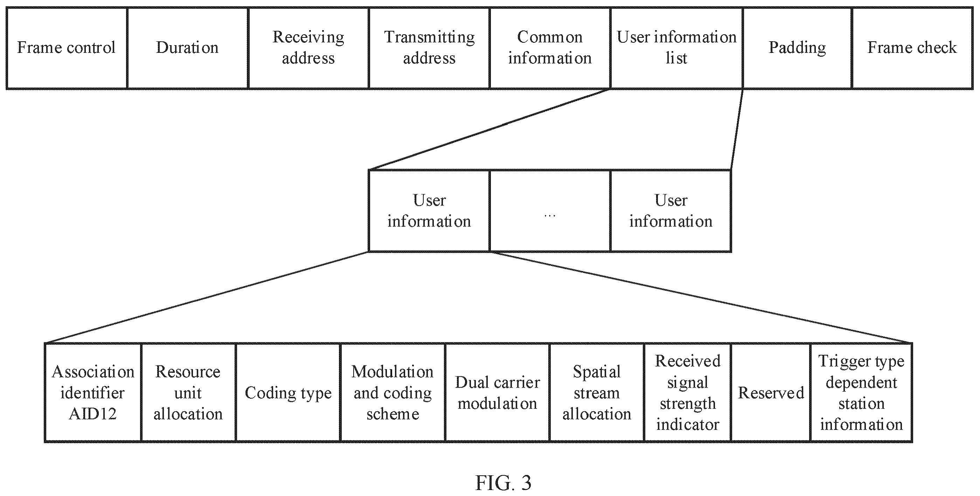

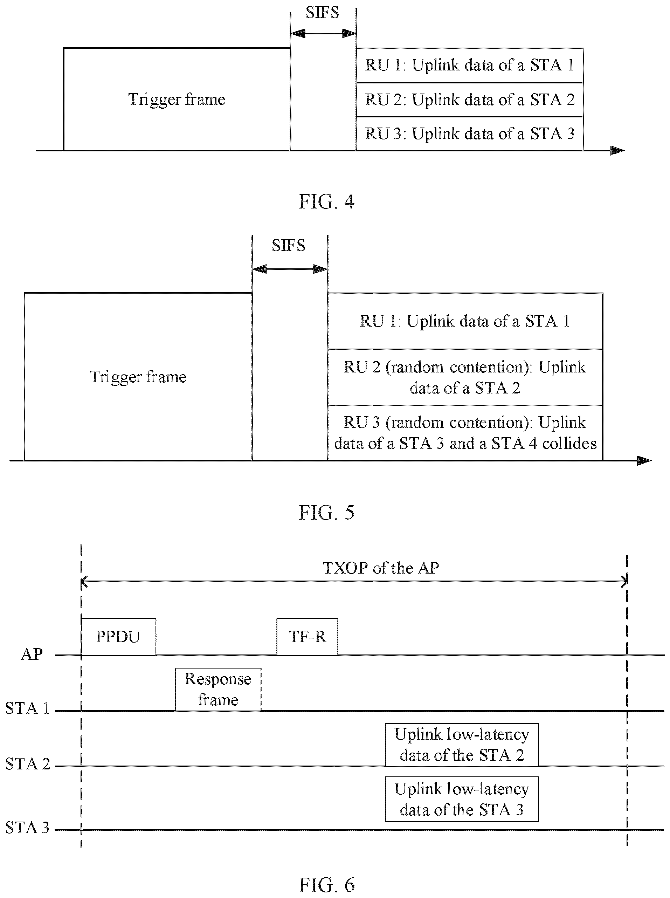

Currently, more wireless network applications and services impose a relatively strict requirement on a latency feature. A next-generation WLAN standard, that is, ultra high reliability (ultra high reliability, UHR), may impose a higher requirement on a low latency, for example, an ultra-low latency less than several milliseconds. Such ultra-low latency is required in some actual application scenarios such as augmented reality (augmented reality, AR), virtual reality (virtual reality, VR), industrial Internet of things (internet of things, IoT), and telemedicine. Therefore, a new low-latency mechanism urgently needs to be introduced to resolve the problem. Currently, a trigger frame (trigger frame, TF)-based uplink orthogonal frequency division multiple access (orthogonal frequency division multiple access, OFDMA) random contention transmission method is proposed to ensure transmission of the low-latency data. For ease of understanding of the transmission procedure, first, with reference to FIG. 3 and FIG. 4, a frame structure of a trigger frame in 802.11ax and a trigger frame-based uplink OFDMA transmission procedure are separately described. In IEEE 802.11be and IEEE 802.11ax, trigger frame-based uplink transmission procedures are consistent except that structures of trigger frames are slightly different.

FIG. 3 is a diagram of a frame structure of an 802.11ax trigger frame. The trigger frame includes a common information field (Common Info) and a user information list field (User Info List). The common information field includes common information that needs to be read by all STAs associated with an AP. The user information list field includes a plurality of user information fields (User Info). Each user information field corresponds to information that needs to be read by one STA. In the user information field, an association identifier 12 (association identifier 12, AID12) indicates an association identifier of a specific STA, and a resource unit (resource unit, RU) allocation (RU Allocation) field indicates a location of an RU allocated to the STA (the STA indicated by the AID12).

FIG. 4 is a diagram of OFDMA uplink transmission based on a trigger frame. As shown in FIG. 4, first, an AP sends a trigger frame, and a STA receives the trigger frame sent by the AP. If the STA obtains, by parsing the trigger frame, a user information field that matches an AID of the STA, after waiting for a SIFS after the STA receives the trigger frame, the STA sends uplink data of the STA at an RU location indicated by a resource element allocation field in the user information field. For example, as shown in FIG. 4, if a STA 1, a STA 2, and a STA 3 each obtain, by parsing a trigger frame, a user information field that matches an AID of itself, the STA 1, the STA 2, and the STA 3 concurrently transmit uplink data in an OFDMA manner respectively on an RU 1, an RU 2, and an RU 3.

It should be noted that each user information field in the trigger frame shown in FIG. 3 includes an AID12 corresponding to one STA, and the AID12 is not 0. There is another type of trigger frame. An AID12 in a part of user information fields in this type of trigger frame is 0. A difference lies in that a value of an AID12 field in a user information field in a trigger frame sent by an AP being 0 indicates a special value of the AID12. This indicates that an RU location indicated by a resource element allocation field in the user information field in which the value of the AID12 is 0 may be used for random contention that is referred to as uplink OFDM random contention (uplink OFDMA random access, UORA). For ease of description, in this application, a trigger frame including a user information field containing at least one AID12 whose value is 0 is referred to as a trigger frame for random contention (briefly referred to as a TF-R below).

It should also be noted that, when the AID12 is associated with the STA, the AP does not allocate 0 to an AID12 of any STA. Therefore, there is no ambiguity when the STA receives a trigger frame that includes an AID12 whose value is 0.

FIG. 5 is a diagram of OFDMA uplink random contention transmission based on a trigger frame. As shown in FIG. 5, first, an AP sends a trigger frame, and a STA receives the trigger frame sent by the AP. If the STA obtains, by parsing the trigger frame, a user information field that matches an AID of the STA, after waiting for a SIFS after the STA receives the trigger frame, the STA sends uplink data of the STA at an RU location indicated by a resource element allocation field in the user information field. If the STA does not obtain, by parsing the trigger frame, a user information field that matches an AID of the STA, and the STA has to-be-transmitted uplink data, the STA may perform backoff according to an uplink OFDMA random access backoff rule (the backoff rule is irrelevant to this application, and details are not described herein) of IEEE 802.11. If backoff succeeds, the STA randomly selects an RU from RUs indicated by all user information fields in which values of AID12s are 0, to send the uplink data. For example, as shown in FIG. 5, a trigger frame sent by an AP indicates that a STA 1 transmits uplink data on an RU 1, and indicates that an RU 2 and an RU 3 are RUs used for random contention (that is, a value of an AID12 is 0). In this example, the STA 1 transmits the uplink data on the RU 1; and a STA 2, a STA 3, and a STA 4 all have to-be-transmitted uplink data, and all back off successfully. In this case, the STA 2, the STA 3, and the STA 4 each randomly select one RU to transmit the uplink data. The STA 2 happens to select the RU 2 alone, and therefore succeeds in transmission. The STA 3 and the STA 4 both select the RU 3, and fail in transmission because a conflict occurs.

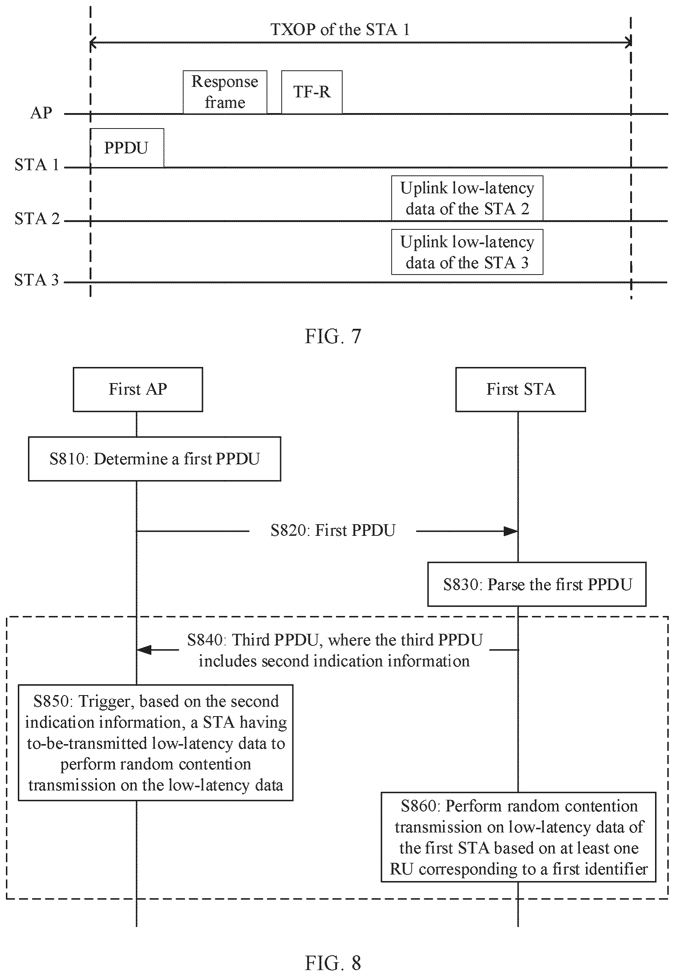

Currently, a method in which an AP sends a TF-R at any moment at which a packet can be sent at a TXOP of the AP or a STA associated with the AP to trigger another STA having a low-latency data to perform uplink transmission in an uplink OFDMA random contention manner is proposed. It should be noted that the another STA having the low-latency data herein is a STA having a low-latency data in the STA associated with the AP. The following describes the method in detail with reference to FIG. 6 and FIG. 7.

FIG. 6 is a diagram in which an AP sends a TF-R at a TXOP of the AP to trigger a STA having a low-latency data to perform uplink transmission in an uplink OFDMA random contention manner. As shown in FIG. 6, a STA 1, a STA 2, and a STA 3 are STAs associated with an AP. The AP sends a physical layer protocol data unit (PHY protocol data unit, PPDU) to the STA 1, and the STA1 sends a response frame for the PPDU to the AP. After receiving the response frame of the STA 1, the AP immediately sends one TF-R. The AP pauses further sending a packet to the STA 1 at a TXOP of the AP. If the STA 2 and the STA 3 happen to have low-latency datas at this time, the STA 2 and the STA 3 send uplink low-latency datas on corresponding RUs according to an uplink OFDMA random contention rule.

FIG. 7 is a diagram in which an AP sends a TF-R at a TXOP of a STA 1 to trigger another STA having a low-latency data to perform uplink transmission in an uplink OFDMA random contention manner. As shown in FIG. 7, a STA 1, a STA2, and a STA3 are STAs associated with an AP. At a TXOP of one STA (for example, the STA 1 in the figure), the STA 1 sends a PPDU to the AP. The AP sends a response frame for the PPDU to the STA, and the AP immediately sends a TF-R frame after one response frame, to trigger a STA having a low-latency data to complete uplink transmission in an uplink OFDMA random contention manner. If the STA 2 and the STA 3 happen to have low-latency datas at this time, the STA 2 and the STA 3 may complete transmission of the uplink low-latency datas of the STA 2 and the STA 3 by using this preemption transmission opportunity.

It can be learned from the foregoing that preemption transmission for an uplink low-latency data is triggered by the TF-R sent by the AP at a TXOP of the AP or another STA. Only the STA knows whether the STA has an urgent uplink low-latency data, while the AP does not know. Therefore, the AP does not know when to send the TF-R, and can only blindly send the TF-R. For example, the TF-R is sent at the TXOP of the AP. In a possible scenario, if no STA has a to-be-transmitted uplink low-latency data after the AP sends the TF-R, no STA performs preemption transmission. Consequently, overheads of the AP are increased, and channel resources are wasted. In another possible scenario, when an uplink low-latency data arrives at a STA, but the AP does not send the TF-R within a long time after the uplink low-latency data arrives, quality of service of the low-latency data is significantly affected. In conclusion, in the conventional technologies, because the AP blindly sends the TF-R, channel resources are wasted, or a low-latency data is not well guaranteed.

In view of this, this application provides a communication method, to effectively resolve the foregoing technical problem. The following describes in detail the method provided in this application.

FIG. 8 is a schematic flowchart of a communication method according to an embodiment of this application. The method may be applied to a TXOP of a first AP. The method includes the following steps.

S810: The first AP determines a first PPDU. The first PPDU includes first indication information. The first indication information indicates whether existence of to-be-transmitted low-latency data is allowed to be reported after a second PPDU. The second PPDU is the first PPDU, or the second PPDU is an acknowledgment PPDU for the first PPDU.

In a possible implementation, the first indication information needs to be indicated by using 1 bit. For example, 0 indicates allowed, and 1 indicates not allowed; or 0 indicates not allowed, and 1 indicates allowed.

In another possible implementation, the first indication information needs to be indicated by using 2 bits. For example, 00 indicates not allowed, 01 indicates that preemption transmission is allowed after the first PPDU, 10 indicates that preemption transmission is allowed after an acknowledgment frame of the first PPDU, and 11 indicates reserved. It should be noted that a correspondence between a value of the 2 bits and a meaning of the value is not limited, provided that the foregoing several cases can be distinguished.

Optionally, information indicated by the first indication information may be indicated by using a field newly added to the first PPDU or by using an existing field in the first PPDU. For example, the information indicated by the first indication information may be indicated by using a field in a physical layer SIG or a field in a media access control (media access control, MAC) frame header.

Optionally, in a possible implementation, the first indication information may not need to be carried in the first PPDU. Before a TXOP is established or in the 1^{st} PPDU in a TXOP, the first AP may indicate that all PPDUs in the TXOP allow another device to report the existence of the to-be-transmitted low-latency data after the second PPDU, or indicate that all PPDUs sent by the first AP in the TXOP allow another device to report the existence of the to-be-transmitted low-latency data after the second PPDU.

S820: The first AP sends the first PPDU. Correspondingly, a STA associated with the first AP receives the first PPDU.

It should be understood that all STAs associated with the first AP can receive the first PPDU of the first AP. For ease of description, a first STA associated with the first AP is used as an example herein to describe actions that need to be subsequently performed by these STAs.

S830: The first STA parses the first PPDU.

It should be understood that the first STA parses the first PPDU to obtain the first indication information. If the first STA has to-be-transmitted low-latency data, the first STA may report this case to the first AP. If the first STA does not have to-be-transmitted low-latency data, the first STA may ignore the information.

Specifically, when the first STA receives the first indication information, and the first STA has the to-be-transmitted low-latency data, if the first indication information indicates not allowed, the first STA considers that the first STA is not allowed to report existence of the to-be-transmitted low-latency data after the second PPDU, and the procedure ends. When the first indication information indicates allowed, the first STA may report, to the first AP, that the first STA has the to-be-transmitted low-latency data. This may also be understood as that the first STA can perform preemption transmission at the TXOP of the first AP.

It may be learned that, in this implementation, the first AP notifies the first STA by sending the first indication information that the first STA can perform reporting if there is currently to-be-transmitted low-latency data. In this way, when the first STA has an urgent low-latency data, the first STA may have an opportunity to feed back this case to the first AP. Then, the first AP may determine, based on feedback of the first STA, whether to enable the first STA to perform preemption transmission at the TXOP of the first AP in a subsequent procedure. Compared with the conventional technologies, this method ensures performance of a low-latency data. This does not cause a waste of channel resources. In addition, overheads are low.

Optionally, with reference to FIG. 8, the following continues to describe in detail a procedure after the first STA parses the first PPDU to obtain the first indication information.

S840: The first STA starts, in a first time period, to send a third PPDU to the first AP. The third PPDU includes second indication information. The second indication information indicates that the first STA has to-be-transmitted low-latency data. The first time period is a time period corresponding to a first duration after the second PPDU. Correspondingly, the first AP starts, in the first time period, to receive the third PPDU.

For example, in this embodiment, the first duration may be referred to as an xIFS, where the xIFS needs to be greater than a SIFS.

To be specific, the first time period is a time period agreed on by the first AP and the first STA. In the first time period, the first STA notifies, by using the third PPDU, the first AP that the first STA has the to-be-transmitted low-latency data, and the first AP listens to a channel in the first time period to obtain the third PPDU.

It should be noted that the first STA does not need to completely send the third PPDU in the first time period, provided that the first STA can start, in the first time period, to send the third PPDU and the first AP can detect the third PPDU on the channel. In this way, the first AP may perform S850 after receiving the second indication information in the third PPDU.

It should be further noted that, because the first STA needs to start, in the first time period, to send the third PPDU and the first AP can detect the third PPDU on the channel, the first STA actually needs to start, in a second time period, to send the first PPDU. The second time period is a time period corresponding to a second duration after the second PPDU. The second duration needs to be less than the first duration.

Optionally, if no STA including the first STA sends a corresponding third PPDU to the first AP, and the first AP detects that the channel is constantly in an idle state in the first time period, the first AP continues to send a to-be-transmitted data packet of the first AP at the TXOP of the first AP after the first time period.

For example, in this application, the third PPDU includes a preemption control frame, and the preemption control frame carries the second indication information. Optionally, the preemption control frame may use an existing frame structure, or may also use a newly-defined frame structure. For example, the preemption control frame may be a clear-to-send (clear to send, CTS) frame in the existing IEEE 802.11 standard. For another example, the preemption control frame may be an acknowledgment (acknowledgment, ACK) frame in the existing IEEE 802.11 standard.

It should be noted that, if a plurality of STAs feed back preemption control frames, all bits included in the preemption control frames sent by the plurality of STAs need to be the same, and receiving addresses (receiving addresses, RAs) of the preemption control frames need to be an address of the first AP. For example, a STA 1 and a STA 2 feed back respective preemption control frames. If bits corresponding to the preemption control frame sent by the STA 1 are 010100, bits corresponding to the preemption control frame sent by the STA 2 are also 010100.

It should be further noted that the plurality of STAs need to start to send the preemption control frames to the first AP at a same moment. For example, after the second PPDU, the plurality of STAs may wait for a SIFS space and then simultaneously feed back the preemption control frames to the first AP.

Optionally, if a STA (for example, a STA 3) that receives the first PPDU is just a destination receiver of a MAC frame carried in the first PPDU, when the first indication information indicates that existence of to-be-transmitted low-latency data is allowed to be reported after the first PPDU, the STA 3 is not allowed to immediately transmit an acknowledgment frame for the first PPDU to the first AP after a SIFS after the first PPDU is received. A specific reason is as follows: The first STA may transmit the preemption control frame in the first time period. If the acknowledgment frame is transmitted after the SIFS after the first PPDU, interference is generated because bits included in the preemption control frame are different from those included in the acknowledgment frame of the first PPDU. As a result, the first AP cannot correctly receive the preemption control frame or the acknowledgment frame. This is also a reason why all the bits included in the preemption control frames sent by the plurality of STAs associated with the first AP need to be the same and reported to the first AP at the same moment.

S850: The first AP triggers, based on the second indication information, a STA having to-be-transmitted low-latency data to perform random contention transmission on the low-latency data.

This step may specifically include: The first AP sends a fourth PPDU. The fourth PPDU includes third indication information. The third indication information includes a first identifier and information about at least one RU corresponding to the first identifier. The first identifier indicates that the at least one RU is used only for random contention transmission performed on the data by the STA having the to-be-transmitted low-latency data.

It may be understood that the fourth PPDU carries a trigger frame for random contention (TF-R), the trigger frame for random contention includes the third indication information, and the third indication information is a user information field #1 in the trigger frame. In this case, the first identifier is information included in an AID12 field in the user information field #1, and the information about the at least one RU corresponding to the first identifier is information included in a resource unit allocation resource in the user information field #1. For example, a value of the AID12 in the user information field #1 is set to 0. This indicates that an RU resource corresponding to the first identifier may be used for random contention transmission on low-latency data and transmission on non-low-latency data.

Further, the first identifier indicates that the at least one RU is used only by a STA having to-be-transmitted low-latency data to perform random contention transmission on the low-latency data. In this case, the value of the AID12 in the user information field #1 may alternatively be set to a currently reserved value, for example, set to 2023. To be specific, the special value indicates that at least one corresponding RU allows random contention transmission of only low-latency data, and an uplink low-latency data packet is sent at a location of the corresponding RU. For example, in this application, the TF-R may be referred to as a limited TF-R.

Optionally, if the first AP also has the to-be-transmitted low-latency data after receiving the preemption control frame and waiting for the SIFS, the first AP may independently determine whether to first transmit the low-latency data of the first AP or first send the trigger frame (a TF-R or a limited TF-R). For example, if the first AP considers that a downlink service is more urgent, the first AP may first send the low-latency data of the first AP, and after completing sending the low-latency data of the first AP, send the trigger frame.

Optionally, the trigger frame in this embodiment of this application may be a basic trigger (basic trigger) frame, or may be a buffer status report poll (buffer status report poll, BSRP) trigger frame. Details are not described again in subsequent embodiments.

S860: The first STA performs random contention transmission on the low-latency data of the first STA based on the at least one RU corresponding to the first identifier.

Optionally, the first STA randomly selects an RU from the at least one RU corresponding to the first identifier, and performs random contention transmission on the low-latency data of the first STA.

Optionally, the first STA may perform backoff according to an OFDMA random access backoff rule in the existing IEEE 802.11ax. If backoff succeeds, the first STA randomly selects an RU from the at least one RU corresponding to the first identifier, and performs random contention transmission on the low-latency data of the first STA.

Optionally, in this application, it may be specified that only the STA (that is, the first STA) that sends the preemption control frame can perform preemption transmission by using the RU corresponding to the first identifier.

Optionally, to improve transmission efficiency of low-latency data, it may also be specified that all STAs that receive the fourth PPDU can perform random contention transmission on a low-latency data by using the at least one RU corresponding to the first identifier.

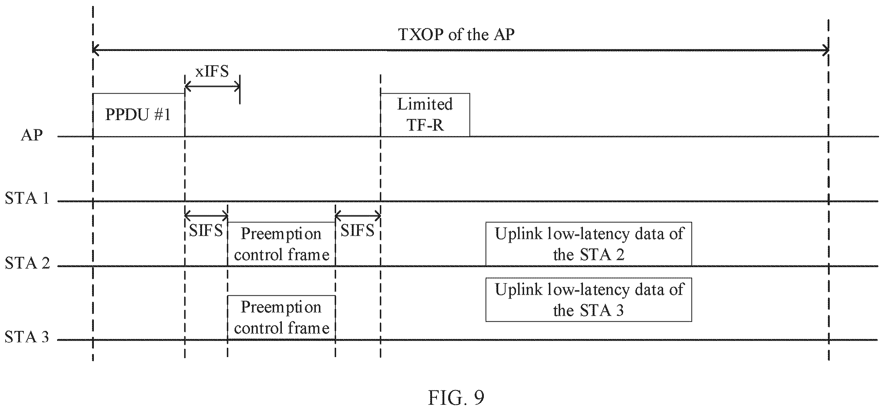

The following describes the method shown in FIG. 8 by using an example with reference to FIG. 9. The method may include the following steps. A STA 1, a STA 2, and a STA 3 are associated with an AP. The AP is a TXOP holder.

Step 1: The AP may add a preemption indication field (that is, an example of the first indication information) to a PPDU #1 (that is, an example of the first PPDU) sent at a TXOP of the AP, to indicate that after the PPDU #1, another device is allowed to report that the another device has a to-be-transmitted low-latency data. If the preemption indication field indicates allowed, the AP continuously listens to a channel in an xIFS duration (that is, an example of the first duration) from a moment when transmission of the PPDU #1 is completed.

Step 2: After receiving the PPDU #1, the STA 1, the STA 2, and the STA 3 check the preemption indication field. If the preemption indication field indicates not allowed, the procedure ends. If the preemption indication field indicates allowed, but the STA (for example, the STA 1) does not have a to-be-transmitted low-latency data, the procedure ends for the STA 1. If the preemption indication field indicates allowed, and the STA (for example, the STA 2 and the STA 3) has a to-be-transmitted low-latency data, the STA2 and the STA 3 immediately send preemption control frames (an example of the third PPDU) to the AP after a SIFS.

Step 3: In a process in which the AP continuously listens to a channel in an xIFS duration after sending the PPDU #1, corresponding operations are performed according to the following two cases:
Case 1: If the channel of the AP is continuously idle in the xIFS duration, subsequent transmission of the AP continues after the xIFS, and the procedure ends.
Case 2: As shown in FIG. 9, the AP performs step 4 after the AP successfully receives the preemption control frames when the channel is busy in the xIFS duration.

Step 4: After receiving the preemption control frames and waiting for the SIFS, the AP sends a limited TF-R frame (that is, an example of the fourth PPDU), allocates several RUs for a STA having a low-latency data to transmit an uplink low-latency data in an OFDMA random contention manner, and performs step 5.

For ease of description, in the following, the limited TF-R frame includes a user information field #1, an AID12 in the user information field #1 is 2023, and RUs in the user information field #1 are an RU #2 and an RU #3.

For example, if the AP has a to-be-transmitted low-latency data, the AP may independently determine whether to first transmit low-latency data of the AP or first send the limited TF-R. This is not limited in this application.

Step 5: The STA 2 and the STA 3 randomly select one of the RU #2 and the RU #3 to transmit uplink low-latency data of the STA 2 and the STA 3. The procedure ends.

The foregoing describes a method for performing preemption transmission at a downlink TXOP, and the following describes a method for performing preemption transmission at an uplink TXOP.

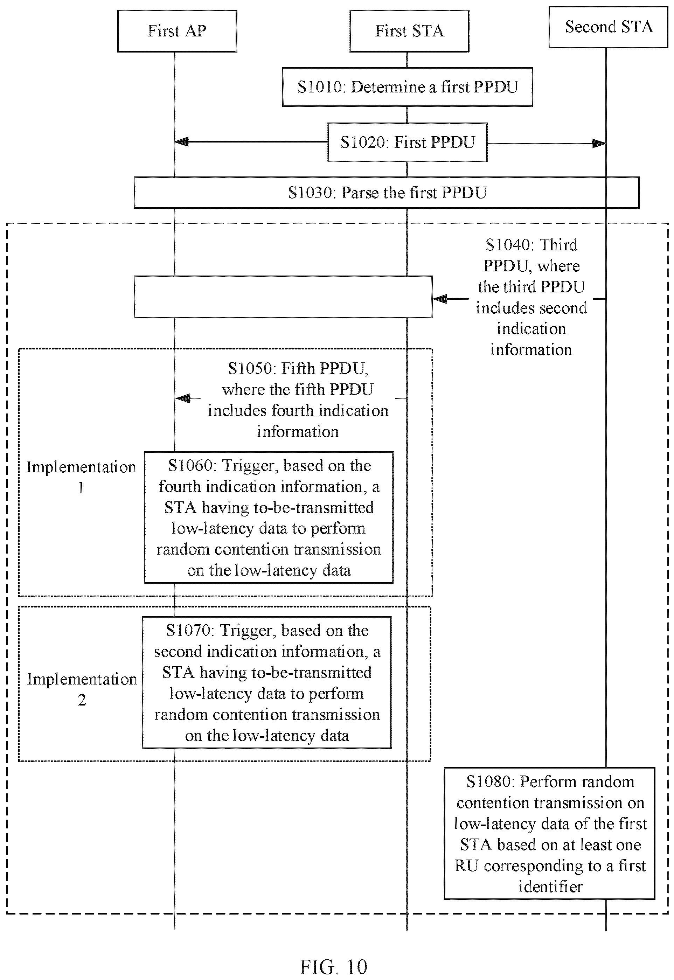

FIG. 10 is a schematic flowchart of another communication method according to an embodiment of this application. The method may be applied to a TXOP of a first STA. The method includes the following steps.

S1010: The first STA determines a first PPDU. The first PPDU includes first indication information. The first indication information indicates that existence of to-be-transmitted low-latency data is allowed to be reported after a second PPDU. The second PPDU is the first PPDU, or the second PPDU is an acknowledgment PPDU for the first PPDU.

For descriptions of the first indication information, refer to the descriptions in S810. Details are not described herein again.

Optionally, in a possible implementation, the first indication information may not need to be carried in the first PPDU. Before a TXOP is established or in the 1^{st} PPDU in a TXOP, the first STA may indicate that all PPDUs in the TXOP allow another device to report existence of to-be-transmitted low-latency data after the second PPDU, or indicate that all PPDUs sent by the first STA in the TXOP allow another device to report existence of to-be-transmitted low-latency data after the second PPDU.

S1020: The first STA sends the first PPDU. Correspondingly, a first AP and a second STA receive the first PPDU from the first STA.

It should be noted that both the first STA and the second STA are STAs associated with the first AP, and the second STA is any STA other than the first STA in STAs associated with the first AP.

S1030: The first AP and the second STA parse the first PPDU.

Specifically, the first AP and the second STA parse the first PPDU to obtain the first indication information. If there is to-be-transmitted low-latency data, this case may be reported to the first AP or the first STA. If there is no to-be-transmitted low-latency data, the information may be ignored.

It may be learned that, in this implementation, the first STA notifies the second STA and the first AP by sending the first indication information that the second STA and the first AP can perform reporting if there is currently to-be-transmitted low-latency data. In this way, when the second STA and the first AP have an urgent low-latency data, there may be an opportunity for feeding back this case, and the first STA may determine, based on feedback, whether to enable the second STA and the first AP to perform preemption transmission at a TXOP of the first STA in a subsequent procedure. Compared with the conventional technologies, this method ensures performance of a low-latency data. This does not cause a waste of channel resources. In addition, overheads are low.

Optionally, with reference to FIG. 10, the following continues to describe in detail a procedure after the first AP and the second STA parse the first PPDU to obtain the first indication information. In this implementation, a procedure when the first AP has to-be-transmitted low-latency data is different from a procedure when the first AP has no to-be-transmitted low-latency data. Therefore, the procedure when the first AP has no to-be-transmitted low-latency data is first described herein.

S1040: The second STA sends a third PPDU to the first AP or the first STA in a first time period. The third PPDU includes second indication information. The second indication information indicates that the second STA has to-be-transmitted low-latency data. The first time period is a time period corresponding to a first duration after the second PPDU. Correspondingly, the first AP or the first STA starts, in the first time period, to receive the third PPDU from the second STA.

For example, in this application, the third PPDU includes a preemption control frame, and the preemption control frame includes the second indication information. For descriptions of the preemption control frame, refer to the descriptions in S840. Details are not described herein again.

Optionally, the second indication information includes address information of the first STA or address information of the first AP. However, it should be noted that, regardless of whether address information included in the second indication information is the address information of the first STA or the address information of the first AP, both the first AP and the first STA can receive the third PPDU. It can be learned from the procedure in FIG. 8 that the first AP needs to determine, based on the second indication information, whether the first AP triggers a STA having to-be-transmitted low-latency data to perform random contention transmission on the low-latency data, that is, whether to trigger the first AP to send a TF-R or a limited TF-R. In this case, because both the first AP and the first STA can receive the third PPDU, in an implementation, the first STA may listen on a channel in the first time period, and after receiving the second indication information in the third PPDU, notify the first AP that the second indication information is received (an implementation 1 for short); or the first AP may listen on a channel in the first time period for the third PPDU (an implementation 2 for short). The following describes two implementations in detail.

In the implementation 1, S1050 and S1060 are performed after S1040.

S1050: After receiving the second indication information in the third PPDU, the first STA sends a fifth PPDU to the first AP. The fifth PPDU includes fourth indication information. The fourth indication information indicates the first AP to trigger a STA having to-be-transmitted low-latency data to perform random contention transmission on the low-latency data. Correspondingly, the first AP receives the fifth PPDU from the first STA.

It should be noted that, in this implementation, after sending the fifth PPDU, the first STA may stop sending data of the first STA. It may be understood that stopping sending the data of the first STA herein may be understood as that the first STA stops using the TXOP of the first STA to perform data transmission, or suspends a right of using the TXOP of the first STA.

For example, in this application, the fifth PPDU includes a preemption notification frame, and the preemption notification frame carries the fourth indication information. Optionally, the preemption notification frame may reuse an existing frame structure, or may also use a newly-defined frame structure. For example, the preemption notification frame is a MAC frame, a value of a type field (Type) in the MAC frame is set to 01, and a value of a subtype field (Subtype) is set to 1111.

S1060: The first AP triggers, based on the fourth indication information, a STA having to-be-transmitted low-latency data to perform random contention transmission on the low-latency data.

In the implementation 2, S1070 is performed after S1040.

S1070: After receiving the second indication information in the third PPDU, the first AP triggers, based on the second indication information, a STA having to-be-transmitted low-latency data to perform random contention transmission on the low-latency data.

It should be noted that, in this implementation, after receiving the second indication information in the third PPDU, the first STA may stop sending data of the first STA.

In S1060 and S1070, the first AP triggers the STA having the to-be-transmitted low-latency data to perform random contention transmission on the low-latency data. This step may specifically include: The first AP sends a fourth PPDU. The fourth PPDU includes third indication information. The third indication information includes a first identifier and information about at least one RU corresponding to the first identifier. The first identifier indicates that the at least one RU is used only for random contention transmission performed on the data by the STA having the to-be-transmitted low-latency data.

It may be understood that the fourth PPDU carries a trigger frame for random contention (TF-R), and the third indication information is a user information field #1 in the trigger frame. In this case, the first identifier is information included in an AID12 field in the user information field #1, and the information about the at least one RU corresponding to the first identifier is information included in a resource unit allocation resource in the user information field. For example, a value of the AID12 in the user information field #1 is set to 0. This indicates that an RU resource corresponding to the first identifier may be used for transmission on low-latency data and non-low-latency data.

Further, the first identifier indicates that the at least one RU is used only by a STA having to-be-transmitted low-latency data to perform random contention transmission on the low-latency data. In this case, the value of the AID12 in the user information field #1 may alternatively be set to a currently reserved value, for example, set to 2023. To be specific, the special value indicates that at least one corresponding RU allows preemption access of only a low-latency data, and an uplink low-latency data packet is sent at a location of the corresponding RU. For example, in this application, the TF-R may be referred to as a limited TF-R.

The following describes the procedure when the first AP has the to-be-transmitted low-latency data. If the first AP has the to-be-transmitted low-latency data, after receiving the first indication information, the first AP sends, to the first STA, a third PPDU corresponding to the first AP, and indicates, by using second indication information in the third PPDU, that the first AP has the to-be-transmitted low-latency data (that is, sends a preemption control frame). A reason is as follows: In a possible scenario, only the first AP has the to-be-transmitted low-latency data, and other STAs do not have to-be-transmitted low-latency data. If the first AP does not send the second indication information, the first STA considers that no device currently needs to transmit low-latency data, and the first STA does not stop using the TXOP of the first STA. Consequently, the first AP cannot send the low-latency data of the first AP in time.

The address information in the second information sent by the first AP is the address information of the first STA.

It should be noted that, as described above, if a STA sends a preemption control frame, because the preemption control frame sent by the STA and that sent by an AP are the same and sent at a same moment, the first AP cannot determine whether another STA also sends a preemption control frame. Therefore, in the implementation 1, after receiving a preemption notification frame, the first AP considers that the preemption notification frame is used to notify the first AP that the first AP can send the low-latency data. In this case, the first AP sends only the low-latency data of the first AP, and does not further send a trigger frame. In the implementation 2, after sending a preemption control frame, the first AP directly sends the low-latency data of the first AP, and also does not further send a trigger frame.

Optionally, after a device performing preemption transmission completes data transmission at the TXOP of the first STA, the first AP may further send a sixth PPDU. The sixth PPDU includes fifth indication information. The fifth indication information indicates that preemption transmission is completed. The first STA may resume a right of using the TXOP of the first STA.

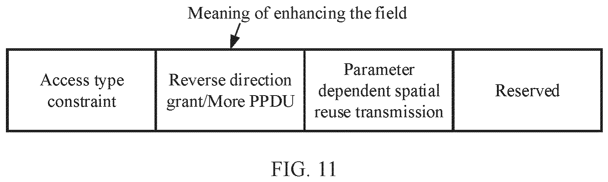

For example, in this application, the sixth PPDU includes a preemption resumption frame, and the preemption resumption frame includes the fifth indication information. Optionally, the preemption resumption frame may use a new control frame or reuse an existing frame. For example, a command and status (command and status, CAS) control field in IEEE 802.11ax/be is reused and enhanced. First, it should be noted that the CAS control field is a type of A control field (A-Control) in IEEE 802.11ax, and corresponds to a control field type whose control identifier (Control ID) is equal to 6. The CAS control field can be embedded in a quality of service data (quality of service data, QoS Data) frame or a quality of service null (quality of service null, QoS Null) frame for transmission, and has very small signaling overheads. For example, FIG. 11 shows a frame structure of a preemption resumption frame based on an enhanced CAS control field. The preemption control frame is obtained by enhancing a reverse direction grant (reverse direction grant, RDG)/more PPDU field in the original CAS control field. For example, when a value of the RDG/more PPDU field is 0, it indicates that the sixth PPDU is the last transmission in preemption transmission. In other words, this time of preemption transmission ends.

S1080: The second STA may perform random contention transmission on the low-latency data of the second STA based on the at least one RU corresponding to the first identifier.

For S1080, refer to the descriptions in S860. Details are not described herein again.

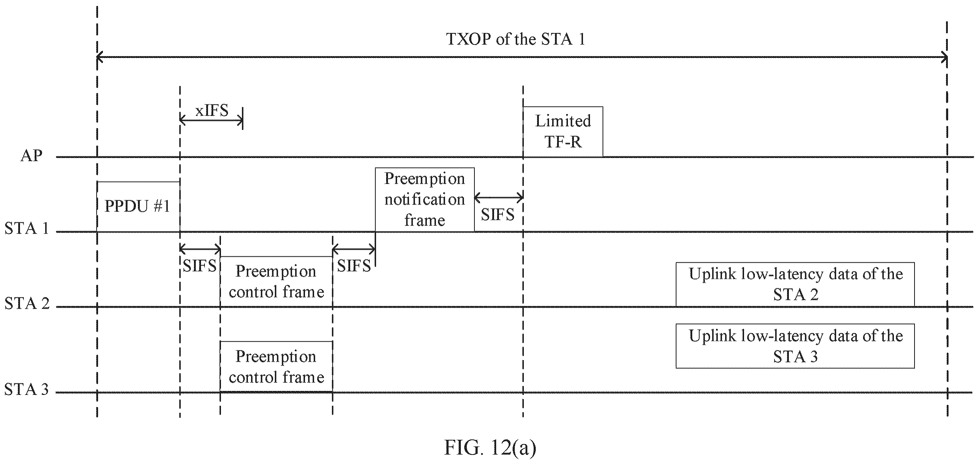

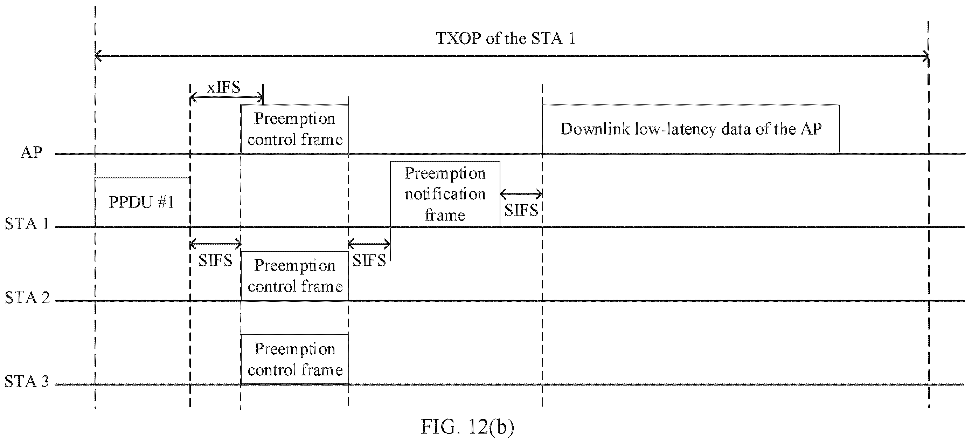

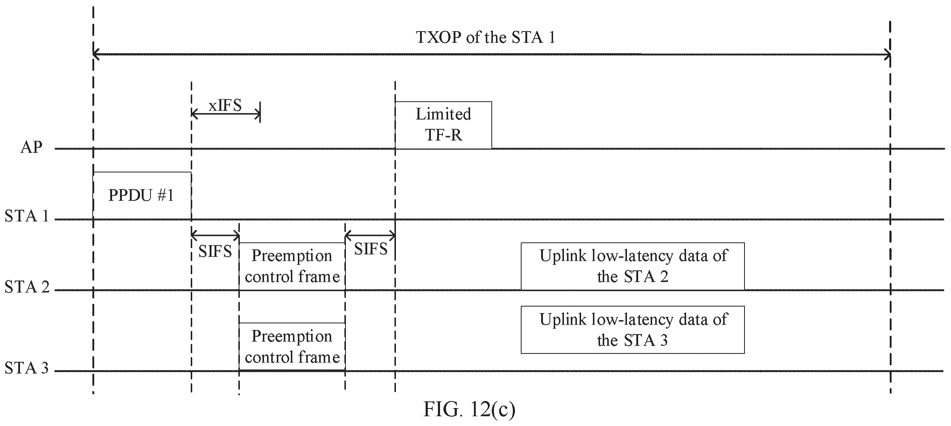

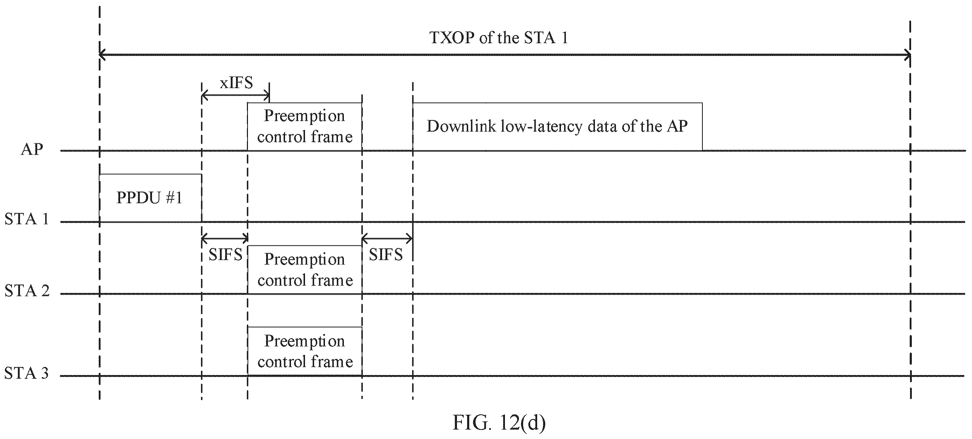

The following describes the method shown in FIG. 10 by using an example with reference to FIG. 12(a), FIG. 12(b), FIG. 12(c), and FIG. 12(d). A STA 1, a STA 2, and a STA 3 are associated with an AP. The STA 1 is a TXOP holder.

In procedures corresponding to FIG. 12(a) and FIG. 12(b), the STA 1 determines, based on whether a preemption control frame is received, whether to send a preemption notification frame to the AP. In the procedure shown in FIG. 12(a), the AP does not send the preemption control frame, that is, the AP has no to-be-transmitted low-latency data. In the procedure shown in FIG. 12(b), the AP sends the preemption control frame.

In procedures corresponding to FIG. 12(c) and FIG. 12(d), the STA 1 constantly does not send the preemption notification frame. In the procedure shown in FIG. 12(c), the AP does not send the preemption control frame. In the procedure shown in FIG. 12(d), the AP sends the preemption control frame.

In the procedures shown in FIG. 12(a) and FIG. 12(b), the method includes the following steps.

Step 1: The STA 1 may add a preemption indication field (that is, an example of the first indication information) to a PPDU #1 (that is, an example of the first PPDU) sent at a TXOP of the STA 1, to indicate that after the PPDU #1, another device is allowed to report that the another device has a to-be-transmitted low-latency data. If the preemption indication field indicates allowed, the STA 1 continuously listens to a channel in an xIFS duration (that is, an example of the first duration) from a moment when transmission of the PPDU #1 is completed.

Step 2: After receiving the PPDU #1, the AP, the STA 2, and the STA 3 check the preemption indication field. If the preemption indication field indicates not allowed, the procedure ends. If the preemption indication field indicates that preemption is allowed, but the device does not have a to-be-transmitted low-latency data, the procedure ends for the STA other than the AP. If the preemption indication field indicates allowed, and the STA (for example, the STA 2 and the STA 3) has a to-be-transmitted low-latency data, the STA immediately sends a preemption control frame (an example of the third PPDU) to the STA 1 after a SIFS.

Step 3: In a process in which the STA 1 continuously listens to a channel in an xIFS duration after sending the PPDU #1 in step 1, corresponding operations are performed according to the following two cases:
Case 1: If the channel is continuously idle in the xIFS duration, the STA 1 continues subsequent data transmission of the STA 1 after the xIFS, and the procedure ends.
Case 2: As shown in FIG. 12(a) and FIG. 12(b), the STA 1 performs step 4 after the STA 1 successfully receives the preemption control frame when the channel is busy in the xIFS duration.

Step 4: After receiving the preemption control frame and waiting for the SIFS, the STA 1 sends a preemption notification frame (that is, an example of the fifth PPDU) to the AP. Step 5 is performed.

Step 5: The AP determines, based on whether the AP sends a preemption control frame, to send low-latency data or send a limited TF-R (that is, an example of the fourth PPDU). Descriptions are separately provided below.

As shown in FIG. 12(a), if the AP does not send the preemption control frame, after receiving the preemption notification frame and waiting for the SIFS, the AP sends the limited TF-R (that is, an example of the fourth PPDU), and allocates several RUs to a STA having a low-latency data to transmit the uplink low-latency data in an OFDMA random contention manner. Step 6 is performed.

As shown in FIG. 12(b), the AP sends the preemption control frame. Because the AP does not know whether another STA also sends a preemption control frame, after receiving the preemption notification frame and waiting for the SIFS, the AP sends the low-latency data of the AP, and does not send the limited TF-R.

For ease of description, in the following, the limited TF-R frame includes a user information field #1, an AID12 in the user information field #1 is 2023, and RUs in the user information field #1 are an RU #2 and an RU #3.

Step 6: The STA 2 and the STA 3 randomly select one of the RU #2 and the RU #3 to transmit uplink low-latency datas of the STA 2 and the STA 3. The procedure ends.

In the procedures shown in FIG. 12(c) and FIG. 12(d), the method includes the following steps.

Step 1: The STA 1 may add a preemption indication field (that is, an example of the first indication information) to a PPDU #1 (that is, an example of the first PPDU) sent at a TXOP of the STA 1, to indicate that after the PPDU #1, another device is allowed to report that the another device has a to-be-transmitted low-latency data. If the preemption indication field indicates allowed, the STA 1 continuously listens to a channel in an xIFS duration (that is, an example of the first duration) from a moment when transmission of the PPDU #1 is completed.

Step 2: After receiving the PPDU #1, the AP, the STA 2, and the STA 3 check the preemption indication field. If the preemption indication field indicates not allowed, the procedure ends. If the preemption indication field indicates that preemption is allowed, but the device that receives the PPDU #1 does not have a to-be-transmitted low-latency data, the procedure ends for the STA other than the AP. If the preemption indication field indicates allowed, and the device that receives the PPDU #1 (for example, the STA 2 and the STA 3) has a to-be-transmitted low-latency data, the STA immediately sends a preemption control frame (an example of the third PPDU) to the STA 1 after a SIFS.

Step 3: In a process in which the STA 1 and the AP continuously listen on a channel in an xIFS duration after sending the PPDU #1 in step 1, corresponding operations are performed according to the following two cases:
Case 1: If the channel is continuously idle in the xIFS duration, the STA 1 continues subsequent data transmission of the STA 1 after the xIFS, and the procedure ends.
Case 2: As shown in FIG. 12(c) and FIG. 12(d), channels of the STA 1 and the AP are busy in the xIFS duration, and then the STA 1 stops transmitting data of the STA 1. After successfully receiving the preemption control frame, the AP performs step 4.

Step 4: The AP determines, based on whether the AP sends a preemption control frame, to send low-latency data or send a limited TF-R (that is, an example of the fourth PPDU). Descriptions are separately provided below.

As shown in FIG. 12(c), if the AP does not send the preemption control frame, after receiving the preemption control frame sent by another STA (for example, the STA 2 and the STA 3) and waiting for the SIFS, the AP sends the limited TF-R (that is, an example of the fourth PPDU), and allocates several RUs to a STA having a low-latency data to transmit the uplink low-latency data in an OFDMA random contention manner. Step 5 is performed. For ease of description, in the following, the limited TF-R frame includes a user information field #1, an AID12 in the user information field #1 is 2023, and RUs in the user information field #1 are an RU #2 and an RU #3.

As shown in FIG. 12(d), the AP sends the preemption control frame. Because the AP does not know whether another STA also sends a preemption control frame, after sending the preemption control frame and waiting for the SIFS, the AP sends the low-latency data of the AP, and does not send the limited TF-R.

Step 5: The STA 2 and the STA 3 randomly select one of the RU #2 and the RU #3 to transmit uplink low-latency data of the STA 2 and the STA 3. The procedure ends.

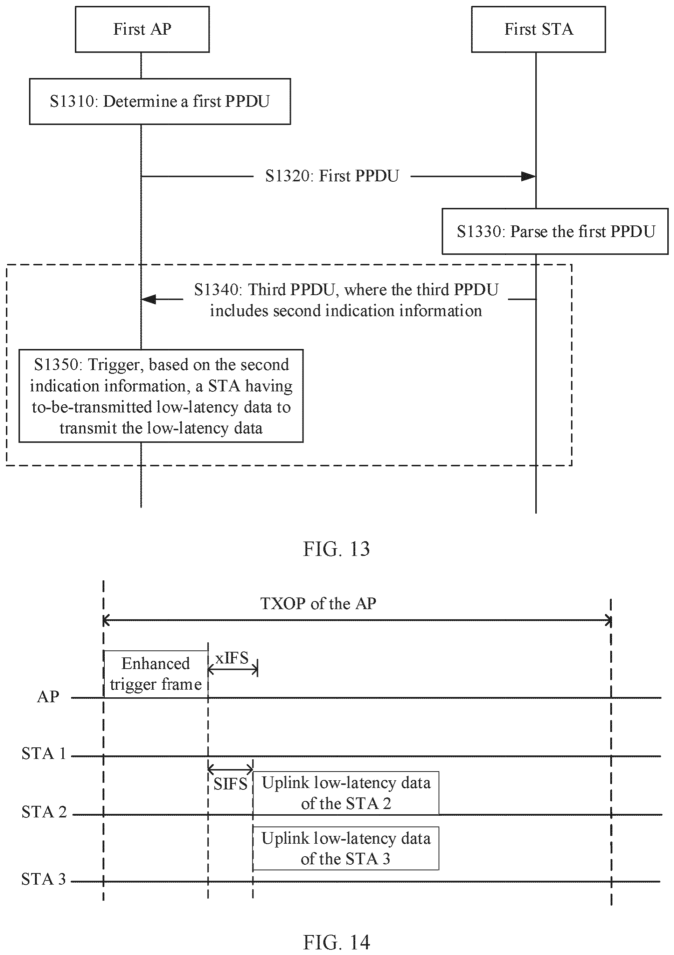

The foregoing describes a method for performing preemption transmission at an uplink TXOP. The following describes another communication method with reference to FIG. 13. The method may also resolve a problem caused when an AP blindly sends a TF-R.

FIG. 13 is a schematic flowchart of still another communication method according to an embodiment of this application. The method may be applied to a TXOP of a first AP. The method includes the following steps.

S1310: The first AP sends a first PPDU. The first PPDU includes first indication information. The first indication information includes a first identifier and information about at least one resource unit RU corresponding to the first identifier. The first identifier indicates that the at least one RU is used only for random contention transmission performed on low-latency data by a station having the to-be-transmitted low-latency data. Correspondingly, a STA associated with the first AP receives the first PPDU.

It should be understood that all STAs associated with the first AP can receive the first PPDU of the first AP. For ease of description, a first STA associated with the first AP is used as an example herein to describe actions that need to be subsequently performed by these STAs.

It may be understood that the first PPDU carries a trigger frame, the trigger frame includes third indication information, and the third indication information is a user information field #1 in the trigger frame. In this case, the first identifier is information included in an AID12 field in the user information field #1, and the information about the at least one RU corresponding to the first identifier is information included in a resource unit allocation resource in the user information field #1.

S1320: The first STA starts, in a first time period, to send low-latency data to the first AP. The first time period is a time period corresponding to a first duration after the first PPDU. Correspondingly, the first AP starts, in the first time period, to receive the low-latency data from the first STA.

For example, in this embodiment, the first duration may be referred to as an xIFS, where the xIFS needs to be greater than a SIFS.

In other words, the first time period is a time period agreed on by the first AP and the first STA. If the first STA has the low-latency data in the first time period, the first STA directly starts, in the first time period, to transmit the low-latency data of the first STA.

Optionally, if the first AP constantly does not receive low-latency data of any STA in the first time period, the first AP continues to transmit the data of the first AP by using the TXOP of the first AP after the first time period.

For example, the trigger frame carried in the first PPDU in this embodiment may be an existing TF-R, or may be an enhanced trigger frame proposed in this application. The following provides several specific implementations of the enhanced trigger frame.

In an implementation, an AID 12 in a user information field of an existing trigger frame may be set to a currently reserved value. For example, the AID 12 is set to 2023. This indicates that the trigger frame is an enhanced trigger frame. In addition, the special value indicates that an RU indicated by the user information field is used only for transmission of low-latency data.

In another possible implementation, 1 bit in a common information field of the existing TF is used as an indication field of the enhanced trigger frame. When a value of the field is 1, it indicates that the frame is an enhanced trigger frame; and when the value of the field is 0, it indicates a meaning indicating that the frame is an original trigger frame. When a value of the field is 0, it indicates that the frame is an enhanced trigger frame; and when the value of the field is 1, it indicates a meaning indicating that the frame is an original trigger frame. In the enhanced trigger frame, the AID12 in the user information field is set to a currently reserved value, for example, set to 2023. The special value indicates that an RU indicated by the user information field is used only for random contention transmission of low-latency data.

In still another possible implementation, a currently reserved (Reserved) value (for example, a value 8) may be used in a trigger type field (Trigger Type) in the common information field of the existing TF to indicate that the frame is an enhanced trigger frame. In the enhanced trigger frame, the AID12 in the user information field is set to 0 or a currently reserved value, for example, 2023.

It should be understood that the method may also be applied to a TXOP of any STA associated with the first AP. Details are not described herein.

It can be learned that the method does not require frame interaction between an AP and a STA, and is all controlled by the AP, thereby reducing implementation complexity.

The following describes the method shown in FIG. 13 by using an example with reference to FIG. 14. The method may include the following steps. A STA 1, a STA 2, and a STA 3 are associated with an AP. The AP is a TXOP holder.

Step 1: The AP sends an enhanced trigger frame (that is, an example of the first PPDU) at a TXOP of the AP, and then the AP continuously listens to a channel in an xIFS duration (a value of the xIFS duration needs to satisfy xIFS>SIFS) from a moment when transmission of the frame is completed.

Step 2: If the STA (for example, the STA 1) has no to-be-transmitted low-latency data, this procedure ends. If the STA (for example, the STA 2 and the STA 3) has a to-be-transmitted low-latency data. After the SIFS, the STA randomly selects an RU that allows preemption and that is indicated by the enhanced trigger frame to transmit the uplink low-latency data of the STA. The procedure ends.

Step 3: In a process in which the AP continuously listens to the channel in the xIFS duration after sending the enhanced trigger frame, corresponding operations are performed according to the following two cases:
Case 1: If the channel of the AP is continuously idle in the xIFS duration, subsequent transmission continues after the xIFS. The procedure ends.
Case 2: As shown in FIG. 14, the AP receives uplink low-latency data sent by the related STA (for example, the STA 2 and the STA 3), and the channel is busy in the xIFS duration.

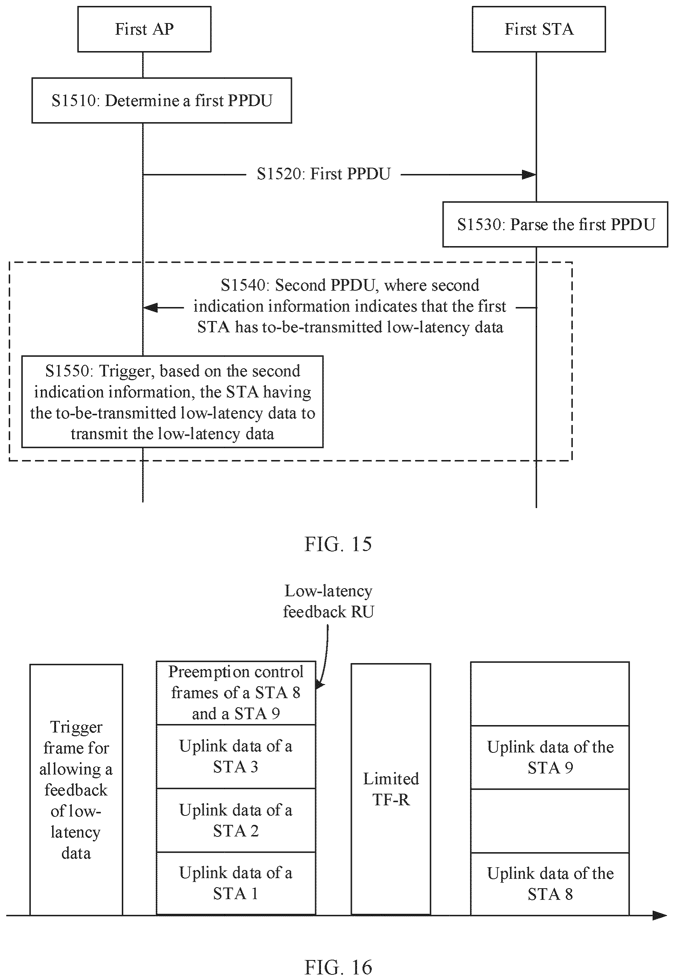

The following describes another communication method with reference to FIG. 15. The method may also resolve a problem caused when an AP blindly sends a TF-R.

FIG. 15 is a schematic flowchart of still another communication method according to an embodiment of this application. The method may be applied to a TXOP of a first AP. The method includes the following steps.

S1510: The first AP determines a first PPDU. The first PPDU includes first indication information. The first indication information includes a second identifier and information about at least one RU corresponding to the second identifier. The second identifier indicates that existence of to-be-transmitted low-latency data is allowed to be fed back on the at least one RU.

It may be understood that the first PPDU includes a trigger frame for random contention (TF-R), the trigger frame for random contention (TF-R) carries the first indication information, and the first indication information is a user information field #1 in the trigger frame. In this case, the second identifier is information included in an AID12 field in the user information field #1, and the information about the at least one RU corresponding to the second identifier is information included in a resource unit allocation resource in the user information field #1. For example, a value of the AID12 in the user information field #1 may be set to a currently reserved value, for example, set to 2024. To be specific, the AID 12 being 2024 indicates that another device is allowed to feed back existence of to-be-transmitted low-latency data on an RU resource corresponding to the AID12.

S1520: The first AP sends the first PPDU. Correspondingly, a STA associated with the first AP receives the first PPDU.

It should be understood that all STAs associated with the first AP can receive the first PPDU of the first AP. For ease of description, a first STA associated with the first AP is used as an example herein to describe actions that need to be subsequently performed by these STAs.

S1530: The first STA parses the first PPDU.

It should be understood that the first STA parses the first PPDU to obtain the first indication information. If the first STA has to-be-transmitted low-latency data, the first STA may report this case to the first AP on the at least one RU corresponding to the second identifier. If the first STA does not have to-be-transmitted low-latency data, the first STA may ignore the information.

In this implementation, the first AP reserves at least one RU for feeding back a low-latency requirement by a STA. By sending the first indication information, the first AP indicates the first STA that reporting can be performed on the reserved RU if to-be-transmitted low-latency data currently exists. In this way, when the first STA has an urgent low-latency data, the first STA may have an opportunity to feed back this case to the first AP. Then, the first AP may determine, based on feedback of the first STA, whether to enable the first STA to perform preemption transmission at a TXOP of the first AP in a subsequent procedure. Compared with the conventional technologies, this method ensures performance of a low-latency data. This does not cause a waste of channel resources. In addition, overheads are low.

Optionally, with reference to FIG. 15, the following continues to describe in detail a procedure after the first STA parses the first PPDU to obtain the first indication information.

S1540: The first STA sends a second PPDU to the first AP on a first RU. The second PPDU includes second indication information. The second indication information indicates that the first STA has to-be-transmitted low-latency data. The first RU is any RU in the at least one RU. Correspondingly, the first AP receives the second PPDU from the first STA on the first RU.

For example, in this application, the second PPDU includes a preemption control frame, and the preemption control frame includes the second indication information. For descriptions of the preemption control frame, refer to the descriptions in S840. Details are not described herein again.

S 1550: The first AP triggers, based on the second indication information, a STA having to-be-transmitted low-latency data to perform random contention transmission on the low-latency data.

This step may specifically include: The first AP sends a third PPDU. The third PPDU includes third indication information. The third indication information includes a first identifier and information about at least one RU corresponding to the first identifier. The first identifier indicates that the at least one RU is used only for random contention transmission performed on the low-latency data by the STA having the to-be-transmitted low-latency data.

It may be understood that the third PPDU is a trigger frame for random contention (TF-R), and the third indication information is a user information field #1 in the trigger frame. In this case, the first identifier is information included in an AID 12 field in the user information field #1, and the information about the at least one RU corresponding to the first identifier is information included in a resource unit allocation resource in the user information field #1. For example, a value of the AID12 in the user information field #1 is set to 0. This indicates that an RU resource corresponding to the first identifier may be used for transmission on low-latency data and non-low-latency data.

Further, the first identifier indicates that the at least one RU is used only by a STA having to-be-transmitted low-latency data to perform random contention transmission on the low-latency data. In this case, the value of the AID12 in the user information field #1 may alternatively be set to a currently reserved value, for example, set to 2023. To be specific, the special value indicates that at least one corresponding RU allows preemption access of only a low-latency data, and an uplink low-latency data packet is sent at a location of the corresponding RU. For example, in this application, the TF-R may be referred to as a limited TF-R.

The following describes the method shown in FIG. 15 by using an example with reference to FIG. 16. The method may include the following steps. An AP is associated with a STA 1, a STA 2, a STA 3, a STA 8, and a STA 9, and the AP is a TXOP holder.

Step 1: The AP sends, at a TXOP of the AP, a trigger frame (that is, an example of the first PPDU) for allowing a low-latency feedback service. An RU (referred to as a "low-latency feedback RU") (that is, an example of the first RU) is reserved in the trigger frame for allowing the low-latency feedback service, and is used for each STA having a low-latency data to feed back a low-latency requirement. A frame structure of the frame is as follows. An association identifier AID12 in one user information field is set to a currently reserved value, for example, 2024. This indicates that an RU corresponding to the user information field is allocated to each STA having a low-latency data to feed back a low-latency requirement.

Step 2: If a STA (for example, the STA 8 and the STA 9) that receives the trigger frame, sent by the AP, for allowing the low-latency feedback service has a to-be-transmitted low-latency data, the STA sends a preemption control frame on the "low-latency feedback RU" after the SIFS. A frame structure of the preemption control frame is consistent with that of the preemption control frame in Embodiment 1. Each STA needs to ensure fully consistency of a length and a value of a scrambler seed (scrambler seed).

Step 3: The AP receives preemption control frames fed back by the STA 8 and the STA 9. In subsequent transmission, the AP may serve, by using a limited trigger frame, the STA 8 and the STA 9 to transmit uplink low-latency data. Details are not described in a subsequent procedure.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the methods and the operations implemented by the device (such as the AP or the STA) may alternatively be implemented by a component (for example, a chip or a circuit) of the device.

The method provided in embodiments of this application is described in detail above with reference to FIG. 1 to FIG. 16. The foregoing methods are mainly described from a perspective of interaction between the AP and the STA. It may be understood that, to achieve the foregoing functions, either of the AP and the STA includes a corresponding hardware structure and/or software module for implementing each function.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

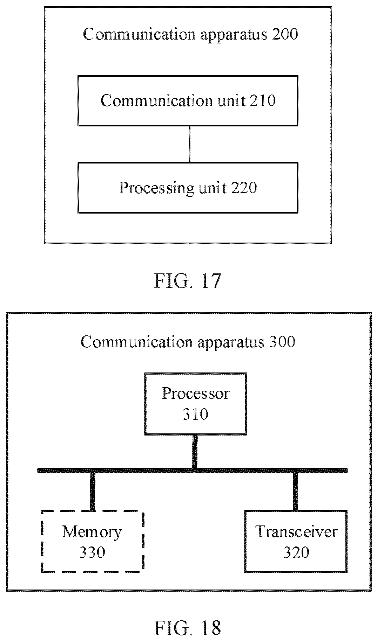

The following describes in detail communication apparatuses provided in embodiments of this application with reference to FIG. 17 and FIG. 18. It should be understood that descriptions of apparatus embodiments correspond to the descriptions of the method embodiments. Therefore, for content that is not described in detail, refer to the foregoing method embodiments. For brevity, details of a part of content are not described herein again. In embodiments of this application, the AP or the STA may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the data transmission method provided in this application, and the following describes a communication apparatus provided in this application. In a possible implementation, the apparatus is configured to implement the steps or the procedures corresponding to the first AP in the foregoing method embodiments. In another possible implementation, the apparatus is configured to implement the steps or the procedures corresponding to the STA (for example, the first STA or the second STA) in the method embodiments.

FIG. 17 is a block diagram of a communication apparatus 200 according to an embodiment of this application. As shown in FIG. 17, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the first AP in the foregoing method embodiments. The processing unit 220 is configured to perform processing-related operations of the first AP in the foregoing method embodiments, and the communication unit 210 is configured to perform sending-related operations of the first AP in the foregoing method embodiments.

In another possible design, the apparatus 200 may implement steps or procedures performed by the STA (for example, the first STA or the second STA) in the foregoing method embodiments. The communication unit 210 is configured to perform receiving-related operations of the STA in the foregoing method embodiments, and the processing unit 220 is configured to perform processing-related operations of the STA in the foregoing method embodiments.

It should be understood that the apparatus 200 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the first AP in the foregoing embodiments, and may be configured to perform the procedures and/or the steps corresponding to the first AP in the foregoing method embodiments. Alternatively, the apparatus 200 may be specifically the STA (for example, the first STA or the second STA) in the foregoing embodiments, and may be configured to perform the procedures and/or the steps corresponding to the STA in the foregoing method embodiments. To avoid repetition, details are not described herein again.

The apparatus 200 in each of the foregoing solutions has a function of implementing a corresponding step performed by the first AP in the foregoing method, or the apparatus 200 in each of the foregoing solutions has a function of implementing a corresponding step performed by the STA (for example, the first STA or the second STA) in the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 17 may be the AP or the STA in the foregoing embodiments, or may be a chip or a chip system, for example, a system on a chip (system on a chip, SoC). The communication unit may be an input/output circuit or a communication interface. The processing unit is a processor, a microprocessor, or an integrated circuit integrated on the chip. This is not limited herein.

FIG. 18 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the first AP in the foregoing method embodiments. In another possible implementation, the apparatus 300 is configured to implement procedures and steps corresponding to the STA (for example, the first STA or the second STA) in the foregoing method embodiments.

It should be understood that the apparatus 300 may be specifically the first AP or the STA (for example, the first STA or the second STA) in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first AP or the STA (for example, the first STA or the second STA) in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the first AP or the STA (for example, the first STA or the second STA) in the method embodiments.

In an implementation process, steps in the foregoing methods can be implemented by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should further be noted that the memory described in this specification is intended to include, but is not limited to, these memories and any other appropriate type of memory.

In addition, this application further provides a computer-readable storage medium. The computer-readable storage medium stores computer instructions, and when the computer instructions are run on a computer, the operations and/or the procedures performed by the first AP or the STA (for example, the first STA or the second STA) in the method embodiments of this application are performed.

This application further provides a computer program product. The computer program product includes computer program code or instructions, and when the computer program code or the instructions are run on a computer, the operations and/or the procedures performed by the first AP or the STA (for example, the first STA or the second STA) in the method embodiments of this application are performed.

In addition, this application further provides a communication system, including a first AP, a first STA, and/or a second STA in embodiments of this application.

It should further be noted that the memory described in this specification is intended to include, but is not limited to, these memories and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, reference may be made to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" mentioned in embodiments of this application are used to distinguish between a plurality of objects, and are not intended to limit sizes, content, an order, a time sequence, priorities, importance, or the like of the plurality of objects. For example, first information and second information do not indicate a difference in an information amount, content, a priority, importance, or the like.

It should be further understood that, in this application, the terms "when", "provided that", and "if" mean that a network element performs corresponding processing in an objective situation, but do not impose a time limit, do not require the network element to take a determining action during implementation, and do not mean other limitations either.

It should be further understood that the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a transmission opportunity TXOP of a first access point, wherein the method comprises:
determining, by the first access point, a first physical layer protocol data unit PPDU, wherein the first PPDU comprises first indication information, the first indication information indicates that existence of to-be-transmitted low-latency data is allowed to be reported after a second PPDU, and the second PPDU is the first PPDU, or the second PPDU is an acknowledgment PPDU for the first PPDU; and
sending, by the first access point, the first PPDU.

2. The method according to claim 1, wherein the method further comprises:
starting, by the first access point in a first time period, to receive a third PPDU from a first station, wherein the third PPDU comprises second indication information, the second indication information indicates that the first station has to-be-transmitted low-latency data, and the first time period is a time period corresponding to a first duration after the second PPDU; and
triggering, by the first access point based on the second indication information, a station having to-be-transmitted low-latency data to perform random contention transmission on the low-latency data.

3. The method according to claim 1 or 2, wherein triggering, by the first access point based on the second indication information, the station having the to-be-transmitted low-latency data to transmit the data comprises:
sending, by the first access point, a fourth PPDU, wherein the fourth PPDU comprises third indication information, the third indication information comprises a first identifier and information about at least one resource unit RU corresponding to the first identifier, and the first identifier indicates that the at least one RU is used only for random contention transmission performed on the low-latency data by the station having the to-be-transmitted low-latency data.

4. The method according to claim 2 or 3, wherein the method further comprises:
before the first access point triggers the station having the to-be-transmitted low-latency data to transmit the low-latency data, sending, by the first access point, low-latency data of the first access point.

5. The method according to any one of claims 2 to 4, wherein the station having the to-be-transmitted low-latency data is the station that sends the second indication information.

6. The method according to any one of claims 2 to 4, wherein the first duration is greater than a short interframe space SIFS, and the SIFS is a time interval between frames in a TXOP.

7. A communication method, applied to a transmission opportunity TXOP of a first access point, wherein the method comprises:
receiving, by a first station, a first physical layer protocol data unit PPDU from the first access point, wherein the first PPDU comprises first indication information, the first indication information indicates that existence of to-be-transmitted low-latency data is allowed to be reported after a second PPDU, and the second PPDU is the first PPDU, or the second PPDU is an acknowledgment PPDU for the first PPDU; and
parsing, by the first station, the first PPDU.

8. The method according to claim 7, wherein the method further comprises:
starting, by the first station in a first time period, to send a third PPDU to the first access point, wherein the third PPDU comprises second indication information, the second indication information indicates that the first station has to-be-transmitted low-latency data, and the first time period is a time period corresponding to a first duration after the second PPDU.

9. The method according to claim 7 or 8, wherein the method further comprises:
receiving, by the first station, a fourth PPDU from the first access point, wherein the fourth PPDU comprises third indication information, the third indication information comprises a first identifier and information about at least one resource unit RU corresponding to the first identifier, and the first identifier indicates that the at least one RU is used only for random contention transmission performed on low-latency data by a station having the to-be-transmitted low-latency data.

10. The method according to claim 9, wherein the station having the to-be-transmitted low-latency data is the station that sends the second indication information.

11. The method according to any one of claims 8 to 10, wherein the first duration is greater than a short interframe space SIFS, and the SIFS is a time interval between frames in a TXOP.

12. A communication method, applied to a transmission opportunity TXOP of a first station, wherein the method comprises:
determining, by the first station, a first physical layer protocol data unit PPDU, wherein the first PPDU comprises first indication information, the first indication information indicates that existence of to-be-transmitted low-latency data is allowed to be reported after a second PPDU, and the second PPDU is the first PPDU, or the second PPDU is an acknowledgment PPDU for the first PPDU; and
sending, by the first station, the first PPDU.

13. The method according to claim 12, wherein the method further comprises:
starting, by the first station in a first time period, to receive a third PPDU sent by a second station, wherein the third PPDU comprises second indication information, the second indication information indicates that the second station has to-be-transmitted low-latency data, and the first time period is a time period corresponding to a first duration after the second PPDU; and
stopping, by the first station, sending data of the first station after receiving the second indication information, or sending, by the first station, a fifth PPDU to a first access point after receiving the second indication information, wherein the fifth PPDU comprises fourth indication information, and the fourth indication information indicates the first access point to trigger a station having to-be-transmitted low-latency data to perform random contention transmission on the low-latency data.

14. The method according to claim 13, wherein the second indication information comprises address information of the first station or address information of the first access point.

15. The method according to claim 13 or 14, wherein the station having the to-be-transmitted low-latency data is the station that sends the second indication information.

16. The method according to claim 12, wherein the method further comprises:
starting, by the first station in a first time period, to receive a third PPDU sent by a first access point, wherein the third PPDU comprises second indication information, the second indication information indicates that the first access point has to-be-transmitted low-latency data, and the first time period is a time period corresponding to a first duration after the second PPDU; and
stopping, by the first station, sending data of the first station after receiving the second indication information, or sending, by the first station, a fifth PPDU to the first access point after receiving the second indication information, wherein the fifth PPDU comprises fourth indication information, and the fourth indication information indicates the first access point to transmit the low-latency data.

17. The method according to any one of claims 13 to 16, wherein the first duration is greater than a short interframe space SIFS, and the SIFS is a time interval between frames in a TXOP.

18. A communication method, applied to a transmission opportunity TXOP of a first station, wherein the method comprises:
receiving, by a first access point, a first physical layer protocol data unit PPDU from the first station, wherein the first PPDU comprises first indication information, the first indication information indicates that existence of to-be-transmitted low-latency data is allowed to be reported after a second PPDU, and the second PPDU is the first PPDU, or the second PPDU is an acknowledgment PPDU for the first PPDU; and
parsing, by the first access point, the first PPDU.

19. The method according to claim 18, wherein the method further comprises:
starting, by the first access point in a first time period, to receive a third PPDU sent by a second station, wherein the third PPDU comprises second indication information, the second indication information indicates that the station that sends the second indication information has to-be-transmitted low-latency data, the first time period is a time period corresponding to a first duration after the second PPDU, and the first access point triggers, based on the second indication information, the station having the to-be-transmitted low-latency data to perform random contention transmission on the low-latency data; or
receiving, by the first access point, a fifth PPDU from the first station, wherein the fifth PPDU comprises fourth indication information, the fourth indication information indicates the first access point to trigger a station having to-be-transmitted low-latency data to perform random contention transmission on the low-latency data, and the first access point triggers, based on the fourth indication information, the station having the to-be-transmitted low-latency data to perform random contention transmission on the low-latency data.

20. The method according to claim 19, wherein the second indication information comprises address information of the first access point or address information of the first station.

21. The method according to claim 19 or 20, wherein triggering, by the first access point based on the second indication information or the fourth indication information, the station having the to-be-transmitted low-latency data to transmit the low-latency data comprises:
sending, by the first access point, a fourth PPDU, wherein the fourth PPDU comprises third indication information, the third indication information comprises a first identifier and information about at least one resource unit RU corresponding to the first identifier, and the first identifier indicates that the at least one RU is used only for random contention transmission performed on the low-latency data by the station having the to-be-transmitted low-latency data.

22. The method according to any one of claims 19 to 21, wherein the station having the to-be-transmitted low-latency data is the station that sends the second indication information.

23. The method according to claim 18, wherein the method further comprises:
sending, by the first access point in a first time period, a third PPDU to the first station, wherein the third PPDU comprises second indication information, the second indication information indicates that the first access point has to-be-transmitted low-latency data, and the first time period is a time period corresponding to a first duration after the second PPDU; and
sending, by the first AP, the low-latency data of the first AP after sending the third PPDU.

24. The method according to claim 23, wherein before sending, by the first AP, the low-latency data of the first AP, the method further comprises:
receiving, by the first access point, a fifth PPDU from the first station, wherein the fifth PPDU comprises fourth indication information, and the fourth indication information indicates the first access point to send the low-latency data.

25. The method according to any one of claims 19 to 24, wherein the first duration is greater than a short interframe space SIFS, and the SIFS is a time interval between frames in a TXOP.

26. A communication method, applied to a transmission opportunity TXOP of a first access point, comprising:
sending, by the first access point, a first physical layer protocol data unit PPDU, wherein the first PPDU comprises first indication information, the first indication information comprises a first identifier and information about at least one resource unit RU corresponding to the first identifier, and the first identifier indicates that the at least one RU is used only for random contention transmission performed on low-latency data by a station having the to-be-transmitted low-latency data; and
starting, by the first access point in a first time period, to receive low-latency data from at least one station in a station associated with the first access point, and stopping, by the first access point, sending data of the first access point, wherein the first time period is a time period corresponding to a first duration after the first PPDU; or
if the first access point has not received, in the first time period, low-latency data from at least one station in a station associated with the first access point, continuing, by the first access point, sending data of the first access point.

27. A communication method, applied to a transmission opportunity TXOP of a first access point, comprising:
receiving, by a first station, a first physical layer protocol data unit PPDU, wherein the first PPDU comprises first indication information, the first indication information comprises a first identifier and information about at least one resource unit RU corresponding to the first identifier, and the first identifier indicates that the at least one RU is used only for random contention transmission performed on low-latency data by a station having the to-be-transmitted low-latency data; and
starting, by the first station in a first time period, to send low-latency data to the first access point, wherein the first time period is a time period corresponding to a first duration after the first PPDU.

28. The method according to claim 26 or 27, wherein the first duration is greater than a short interframe space SIFS, and the SIFS is a time interval between frames in a TXOP.

29. A communication apparatus, comprising a module or a unit configured to perform the method according to any one of claims 1 to 28.

30. A communication apparatus, comprising: a processor, configured to execute computer instructions stored in a memory, so that the apparatus performs the method according to any one of claims 1 to 6, or the apparatus performs the method according to any one of claims 7 to 11, or the apparatus performs the method according to any one of claims 12 to 17, or the apparatus performs the method according to any one of claims 18 to 25, or the apparatus performs the method according to claim 26 or 28, or the apparatus performs the method according to claim 27 or 28.

31. A communication apparatus, wherein the apparatus comprises a logic circuit and an input/output interface, and the logic circuit is configured to: couple to the input/output interface, and transmit data through the input/output interface, to perform the method according to any one of claims 1 to 6, or perform the method according to any one of claims 7 to 11, or perform the method according to any one of claims 12 to 17, or perform the method according to any one of claims 18 to 25, or perform the method according to claim 26 or 28, or perform the method according to claim 27 or 28.

32. A communication system, comprising a first access point, a first station, and/or a second station, wherein
the first access point is configured to perform the method according to any one of claims 1 to 6, and the first station is configured to perform the method according to any one of claims 7 to 11; or
the first access point is configured to perform the method according to any one of claims 18 to 25, and the first station is configured to perform the method according to any one of claims 12 to 17; or
the first access point is configured to perform the method according to claim 26 or 28, and the first station is configured to perform the method according to claim 27 or 28.

33. A computer-readable storage medium, wherein computer instructions are stored in the computer-readable storage medium, and when the computer instructions run on a computer, the method according to any one of claims 1 to 6 is performed, or the method according to any one of claims 7 to 11 is performed, or the method according to any one of claims 12 to 17 is performed, or the method according to any one of claims 18 to 25 is performed, or the method according to claim 26 or 28 is performed, or the method according to claim 27 or 28 is performed.

34. A chip, comprising a processor and an interface, and configured to invoke from a memory and run a computer program stored in the memory, to perform the method according to any one of claims 1 to 6, or perform the method according to any one of claims 7 to 11, or perform the method according to any one of claims 12 to 17, or perform the method according to any one of claims 18 to 25, or perform the method according to claim 26 or 28, or perform the method according to claim 27 or 28.
